# EUROPEAN PATENT APPLICATION

(11) **EP 4 325 799 A1**
(43) Date of publication of application: **21.02.2024**
(21) Application number: 23191248.6
(22) Date of filing: 14.08.2023
(51) Int. Cl.: H04L 45/00, H04L 45/28

(54) **DATA TRANSMISSION METHOD, COMMUNICATION SYSTEM, AND ROUTE ADVERTISEMENT METHOD**

(30) Priority: 17.08.2022 CN 202210988616
(71) Applicant: Huawei Technologies Co., Ltd., Shenzhen, Guangdong 518129 (CN)
(72) Inventor: HUANG, Shigeng, Shenzhen, 518129 (CN); WANG, Yanjun, Shenzhen, 518129 (CN); ZHONG, Mingming, Shenzhen, 518129 (CN); XUE, Wei, Shenzhen, 518129 (CN); HU, Yongjian, Shenzhen, 518129 (CN); ZHANG, Wenfeng, Shenzhen, 518129 (CN)
(74) Representative: Körber, Martin Hans

(57) **Abstract**

Embodiments of this application disclose a data transmission method, a communication system, and a route advertisement method, to improve data transmission stability when a core network device performs a service. The method includes: An access node sends first traffic to a first core network device in a core network through a first service plane of a bearer network. The access node sends second traffic to a second core network device in the core network through a second service plane of the bearer network. The first service plane and second service plane are independent all-active service planes in the bearer network. Service data sent by the base station is split on the access node, and split data each corresponds to one transmission path, so that the first core network device and the second core network device independently perform data transmission with the access node. Even if one transmission path is completely interrupted, the service data may still be transmitted by another core network device through the other transmission path. This greatly improves network reliability.

## Description

### TECHNICAL FIELD

This application relates to the field of network communication technologies, and specifically, to a data transmission method, a communication system, and a route advertisement method.

### BACKGROUND

An IP (internet protocol) bearer network is used to establish a dedicated data tunnel between a base station and a core network for transparent transmission of a packet. To improve service reliability, detection technologies such as operation, administration, and maintenance (operation, administration, and maintenance, OAM) and bidirectional forwarding detection (bidirectional forwarding detection, BFD) are usually used to detect tunnel connectivity, and protection switching and route convergence are triggered when a fault occurs, to ensure service availability.

The IP bearer network includes an access stratum, an aggregation layer, and a core layer. Each layer includes several nodes, which are respectively corresponding to an access node, an aggregation node, and a core node. The aggregation node and the core node each exist in pairs in a form of active and standby nodes. The active node is a node on a working service path, and the standby node is a node on a protection service path. When a node or link on the working service path is faulty, the protection switching is triggered to ensure the service availability. Common service protection technologies include automatic protection switching (automatic protection switching, APS), fast protection switching (fast protection switching, FPS), rerouting, and the like. A basic working principle is to create two mutually protected tunnels (tunnels): one working tunnel and one protection tunnel. In a normal case, a service is on the working tunnel in an active (active) state, and the protection tunnel is in a standby (standby) state. If a fault is detected by using the tunnel detection technologies, service protection switching is triggered. In this case, the protection tunnel is active and the working tunnel is standby. The aggregation node is used as an example. An active aggregation node and a standby aggregation node are respectively corresponding to two mutually protected tunnels: one working tunnel and one protection tunnel. In a normal case, the service is on the working tunnel in an active state, and the protection tunnel is in a standby state. If it is detected that the working tunnel is disconnected, the protection switching is triggered. In this case, the protection tunnel is active and the working tunnel is standby. To be specific, the service is originally transmitted via the active aggregation node, and transmitted via the standby aggregation node after the protection switching.

A working principle of using the OAM and the BFD to perform service detection is that connectivity detection protocol packets are periodically sent, and a remote end reports an alarm based on a quantity of packets received within a periodicity. This manner is bound to be restricted by a fault detection rate and a switching success rate. If no fault is detected by using the detection technologies, an automatic protection switching function fails, and service data is still transmitted on a faulty path. As a result, a service is continuously interrupted, and reliability is insufficient.

### SUMMARY

Embodiments of this application provide a data transmission method, to improve data transmission stability of a service performed by a core network device.

According to a first aspect, this application provides a data transmission method, including: An access node sends first traffic to a first core network device in a core network through a first service plane of a bearer network. The access node sends second traffic to a second core network device in the core network through a second service plane of the bearer network. The first service plane and the second service plane are independent all-active service planes in the bearer network.

The access node is a node at an access stratum of the bearer network, and the access node is communicatively connected to a base station. Both the first core network device and the second core network device are core network devices for transmission of different data in a core network resource pool, and each may be represented as a single core network device or may be represented as a core network device group. Service data sent by the base station is split at the access node, and split data each corresponds to one transmission path, so that the first core network device and the second core network device each perform data transmission with the access node through an independent path.

In this embodiment of this application, the first traffic and the first traffic are transmitted independently. When detecting that a service of the first core network device is interrupted, a control plane device in a core network may switch the first traffic to the second core network device to continue performing the service. Compared with a conventional technology in which all core network devices perform data transmission through a same service path, in this solution, service reliability may not depend on device reliability. Even if one transmission path is completely interrupted, service data may still be transmitted by another core network device through another transmission path. This greatly improves network reliability.

In a possible implementation, the method further includes: When the first service plane is faulty, the access node switches the first traffic from the first service plane to the second service plane.

In this embodiment of this application, when the first service plane is faulty, the first core network device cannot receive the first traffic through the first service plane. Therefore, to ensure service availability, the access node switches the first traffic to the second service plane. In this way, the second core network device performs, by using the first traffic, a first service that is originally to be performed on the first core network device. It may be understood that, when the first service plane is faulty, the second core network device not only performs the first service by using the first traffic, but also performs the second service by using the second traffic.

In a possible implementation method, the bearer network includes a first aggregation node and a second aggregation node. The first aggregation node is an active aggregation node on the first service plane, and the second aggregation node is a standby aggregation node on the first service plane. The second aggregation node is an active aggregation node on the second service plane, and the first aggregation node is a standby aggregation node on the second service plane.

In this embodiment of this application, a connection manner in which aggregation nodes exist in pairs and protect each other is retained. For the first service plane, the second aggregation node is a protection node of the first aggregation node. When the first aggregation node is faulty or a link connected to the first aggregation node is interrupted, node-level protection switching and link-level protection switching are triggered to switch the first traffic transmitted by the first aggregation node to the second aggregation node. Because the first service plane is not faulty, the first traffic is still returned to the first service plane, and a destination address is the first core network device.

In a possible implementation method, the first service plane includes a first core node, and the second service plane includes a second core node. The access node is connected to the first core network device via the first aggregation node and the first core node. The access node is connected to the second core network device via the second aggregation node and the second core node.

In this embodiment of this application, the first core node and the second core node are not in an active and standby node relationship, but are respectively active core nodes on the two service planes. Traffic is not split at a core node, but is directly sent to a corresponding core network device. A node device in a bearer network in a related technology does not need to be changed, and only a communication connection manner and a data sending policy between the core node and the core network device need to be changed.

In a possible implementation method, the first service plane further includes a third core node, and the second service plane further includes a fourth core node. The first core node is the active core node on the first service plane, and the third core node is a standby core node on the first service plane. The second core node is the active core node on the second service plane, and the fourth core node is a standby core node on the second service plane.

In this embodiment of this application, to improve reliability of data transmission at the core nodes, a protection node may be set for the active core node on the service plane. To be specific, the third core node is a protection node of the first core node, and the fourth core node is a protection node of the second core node. When transmission between the first aggregation node and the first core node is faulty, in an uplink direction of traffic transmission, the second aggregation node sends, to the third core node, the first traffic sent by the access node; and in a downlink direction of the traffic transmission, the second aggregation node sends the first traffic to the access node via the third core node.

In a possible implementation method, the access node is connected to the first service plane through a first pseudo wire, and the access node is connected to the second service plane through a second pseudo wire.

In this embodiment of this application, when the data transmission method is applied to layer 2 networking and layer 3 networking, the access node is connected to the first service plane through the first pseudo wire, and the access node is connected to the second service plane through the second pseudo wire.

In a possible implementation method, the access node determines, according to a first access control list (ACL) rule, to forward a first packet through the first pseudo wire. A destination IP address of the first packet is an address of the first core network device.

In a possible implementation method, the access node determines, according to a second ACL rule, to forward a second packet through the second pseudo wire. A destination IP address of the second packet is an address of the second core network device.

In this embodiment of this application, when the data transmission method is applied to layer 2 networking and layer 3 networking, the access node may split, by using an access control list ACL function, data sent by the base station to different core network devices.

In a possible implementation method, the access node obtains a first route to a first core network device. The first route includes a first routing prefix and a first next hop. An IP address of the first core network device matches a destination network segment of the first routing prefix, and the first next hop is the first aggregation node on the first service plane. The access node obtains a second route to the second core network device. The second route includes a second routing prefix and a second next hop. An IP address of the second core network device matches a destination network segment of the second routing prefix, and the second next hop is the second aggregation node on the second service plane.

In a possible implementation method, the access node receives the first packet, and forwards the first packet to the first aggregation node based on the first route. A destination address of the first packet is the IP address of the first core network device.

In a possible implementation method, the access node receives the second packet and forwards the second packet to the second aggregation node based on the second route. A destination address of the second packet is the IP address of the second core network device.

In this embodiment of this application, when the data transmission method is applied to layer 3 to edge networking, after accessing traffic from the base station, the access node may perform splitting and forwarding based on the destination IP address, and directly perform splitting through routing without using an ACL function.

In a possible implementation method, the access node receives, through the first service plane, the first traffic sent by the first core network device. The access node receives, through the second service plane, the second traffic sent by the second core network device.

In this embodiment of this application, the foregoing is a method for sending the traffic by the access node when the transmission direction is uplink. Correspondingly, the method performed by the access node further includes receiving downlink traffic, and sending the downlink traffic to the base station.

In a possible implementation method, when the first service plane is faulty, the access node receives the first traffic switched from the first service plane to the second service plane.

In this embodiment of this application, when the first service plane is faulty, the first core network device cannot send the first traffic through the first service plane. As a result, a session is interrupted. After the session of the first core network device is interrupted, the control plane device in the core network searches for a core network device on which a service is normally performed: the second core network device. In this case, the control plane device in the core network switches a first service corresponding to the first traffic to the second core network device, and the second core network device sends the first traffic to the access node through the second service plane, so that the access node sends the first traffic to the base station, and the service recovers.

According to a second aspect, this application provides a communication system, including an access node, a first aggregation node, a second aggregation node, a first core node, a second core node, a first core network device, and a second core network device. The access node is connected to the first core network device via the first aggregation node and the first core node. The access node is connected to the second core network device via the second aggregation node and the second core node. The access node is configured to send first traffic to the first core network device through a first service plane. The first service plane includes the first aggregation node and the first core node. The access node is further configured to send second traffic to the second core network device through the second service plane. The second service plane includes the second aggregation node and the second core node. The first service plane and the second service plane are independent all-active service planes in a bearer network.

In a possible implementation method, the access node is further configured to switch the first traffic to the second service plane when the first service plane is faulty.

In a possible implementation method, the access node is connected to the first aggregation node through a first pseudo wire, and the access node is connected to the second aggregation node through a second pseudo wire.

In a possible implementation method, the access node is further configured to determine, according to a first ACL rule, to forward a first packet through the first pseudo wire. A destination IP address of the first packet is an address of the first core network device.

In a possible implementation method, the access node is further configured to determine, according to a second ACL rule, to forward a second packet through the second pseudo wire. A destination IP address of the second packet is an address of the second core network device.

In a possible implementation method, the access node is further configured to obtain a first route to the first core network device. The first route includes a first routing prefix and a first next hop. An IP address of the first core network device matches a destination network segment of the first routing prefix, and the first next hop is the first aggregation node on the first service plane. The access node is further configured to obtain a second route to the second core network device. The second route includes a second routing prefix and a second next hop. An IP address of the second core network device matches a destination network segment of the second routing prefix, and the second next hop is the second aggregation node on the second service plane.

In a possible implementation method, the access node is further configured to: receive the first packet, and forward the first packet to the first aggregation node based on the first route. A destination address of the first packet is the IP address of the first core network device.

In a possible implementation method, the access node is further configured to: receive the second packet, and forward the second packet to the second aggregation node based on the second route. A destination address of the second packet is the IP address of the second core network device.

In a possible implementation method, the first aggregation node is configured to send, to the first core node, the first traffic sent by the access node. The second aggregation node is configured to send, to the second core node, the second traffic sent by the access node.

In a possible implementation method, the first aggregation node is an active aggregation node on the first service plane, and the second aggregation node is a standby aggregation node on the first service plane. The second aggregation node is an active aggregation node on the second service plane, and the first aggregation node is a standby aggregation node on the second service plane.

In a possible implementation method, the first core node is configured to: receive the first traffic sent by the first aggregation node, and forward the first traffic to the first core network device. The second core node is configured to: receive the second traffic sent by the second aggregation node, and forward the second traffic to the second core network device.

In a possible implementation method, the first service plane further includes a third core node, and the second service plane further includes a fourth core node. The first core node is an active core node on the first service plane, and the third core node is a standby core node on the first service plane. The second core node is an active core node on the second service plane, and the fourth core node is a standby core node on the second service plane.

In a possible implementation method, the third core node is connected to the second aggregation node, and the fourth core node is connected to the first aggregation node.

In a possible implementation method, the first core network device is configured to receive, through the first service plane, the first traffic sent by the access node. The second core network device is configured to receive, through the second service plane, the second traffic sent by the access node.

In a possible implementation method, the first core network device and the second core network device are specifically user plane function (UPF) or mobility management entity (MME) devices.

According to a third aspect, this application provides a communication method, including an access node, a first aggregation node, a second aggregation node, a first core node, a second core node, a first core network device, and a second core network device.

The method includes: the access node sends first traffic to the first core network device through a first service plane. The first service plane includes the first aggregation node and the first core node. The access node sends second traffic to the second core network device through the second service plane. The second service plane includes the second aggregation node and the second core node. The first service plane and the second service plane are independent all-active service planes in a bearer network.

In a possible implementation method, when the first service plane is faulty, the access node switches the first traffic to the second service plane.

In a possible implementation method, the access node is connected to the first aggregation node through a first pseudo wire, and the access node is connected to the second aggregation node through a second pseudo wire.

In a possible implementation method, the access node determines, according to a first access control list (ACL) rule, to forward a first packet through the first pseudo wire. A destination IP address of the first packet is an address of the first core network device.

In a possible implementation method, the access node determines, according to a second ACL rule, to forward a second packet through the second pseudo wire. A destination IP address of the second packet is an address of the second core network device.

In a possible implementation, the method further includes: the access node obtains a first route to the first core network device. The first route includes a first routing prefix and a first next hop. An IP address of the first core network device matches a destination network segment of the first routing prefix, and the first next hop is the first aggregation node on the first service plane. The access node obtains a second route to the second core network device. The second route includes a second routing prefix and a second next hop. An IP address of the second core network device matches a destination network segment of the second routing prefix, and the second next hop is the second aggregation node on the second service plane.

In a possible implementation, the method further includes: the access node receives the first packet, and forwards the first packet to the first aggregation node based on the first route. A destination address of the first packet is the IP address of the first core network device.

In a possible implementation, the method further includes: the access node receives the second packet and forwards the second packet to the second aggregation node based on the second route. A destination address of the second packet is the IP address of the second core network device.

In a possible implementation, the method further includes: the first aggregation node sends, to the first core node, the first traffic sent by the access node. The second aggregation node sends, to the second core node, the second traffic sent by the access node.

In a possible implementation method, the first aggregation node is an active aggregation node on the first service plane, and the second aggregation node is a standby aggregation node on the first service plane. The second aggregation node is an active aggregation node on the second service plane, and the first aggregation node is a standby aggregation node on the second service plane.

In a possible implementation, the method further includes: the first core node receives the first traffic sent by the first aggregation node, and forwards the first traffic to the first core network device. The second core node receives the second traffic sent by the second aggregation node, and forwards the second traffic to the second core network device.

In a possible implementation method, the first service plane further includes a third core node, and the second service plane further includes a fourth core node. The first core node is an active core node on the first service plane, and the third core node is a standby core node on the first service plane. The second core node is an active core node on the second service plane, and the fourth core node is a standby core node on the second service plane.

In a possible implementation method, the third core node is connected to the second aggregation node, and the fourth core node is connected to the first aggregation node.

In a possible implementation, the method further includes: the first core network device receives, through the first service plane, the first traffic sent by the access node. The second core network device receives, through the second service plane, the second traffic sent by the access node.

According to a fourth aspect, this application provides a route advertisement method, including: A first aggregation node obtains a first route to a first core network device. The first route includes a first routing prefix and a first next hop. An IP address of the first core network device matches a destination network segment of the first routing prefix, and the first next hop is a first core node on a first service plane. The first aggregation node obtains a second route to the first core network device. The second route includes the first routing prefix and a second next hop. The second next hop is a third core node on the first service plane, and a priority of the first route is higher than a priority of the second route. The first aggregation node obtains a third route to a second core network device. The third route includes a second routing prefix and a third next hop. An IP address of the second core network device matches a destination network segment of the second routing prefix, and the third next hop is a second core node on a second service plane. The first aggregation node obtains a fourth route to the second core network device. The fourth route includes the second routing prefix and a fourth next hop. The fourth next hop is a fourth core node on the second service plane, a priority of the fourth route is higher than a priority of the third route, and the priority of the second route is higher than the priority of the fourth route. The first service plane and the second service plane are independent all-active service planes in a bearer network.

In a possible implementation, the method further includes: An access node obtains a fifth route to the first core network device. The fifth route includes the first routing prefix and a fifth next hop, and the fifth next hop is the first aggregation node. The access node obtains a sixth route to the first core network device. The sixth route includes the first routing prefix and a sixth next hop. The sixth next hop is a second aggregation node, and a priority of the fifth route is higher than a priority of the sixth route. The access node obtains a seventh route to the second core network device. The seventh route includes the second routing prefix and a seventh next hop. The seventh next hop is the first aggregation node. The access node obtains an eighth route to the second core network device. The eighth route includes the second routing prefix and an eighth next hop. The eighth next hop is the second aggregation node, and a priority of the eighth route is higher than a priority of the seventh route.

In a possible implementation, the method further includes: The second aggregation node obtains a ninth route to the first core network device. The ninth route includes the first routing prefix and a ninth next hop. The ninth next hop is the first core node. The second aggregation node obtains a tenth route to the first core network device. The tenth route includes the first routing prefix and a tenth next hop. The tenth next hop is the third core node, and a priority of the tenth route is higher than a priority of the ninth route. The second aggregation node obtains an eleventh route to the second core network device. The eleventh route includes the second routing prefix and an eleventh next hop. The eleventh next hop is the second core node. The second aggregation node obtains a twelfth route to the second core network device. The twelfth route includes the second routing prefix and a twelfth next hop. The twelfth next hop is the fourth core node, a priority of the eleventh route is higher than a priority of the twelfth route, and the priority of the twelfth route is higher than the priority of the tenth route.

In a possible implementation, the method further includes: The first core node obtains a thirteenth route to a base station. The thirteenth route includes a third routing prefix and a thirteenth next hop. An IP address of the base station matches a destination network segment of the third routing prefix, and the thirteenth next hop is the first aggregation node. The first core node obtains a fourteenth route to the base station. The fourteenth route includes the third routing prefix and a fourteenth next hop. The fourteenth next hop is the second aggregation node, and a priority of the thirteenth route is higher than a priority of the fourteenth route.

In a possible implementation, the method further includes: The second core node obtains a fifteenth route to the base station. The fifteenth route includes the third routing prefix and a fifteenth next hop. The fifteenth next hop is the first aggregation node. The second core node obtains a sixteenth route to the base station. The fourteenth route includes the third routing prefix and a sixteenth next hop. The sixteenth next hop is the second aggregation node, and a priority of the sixteenth route is higher than a priority of the fifteenth route.

According to a fifth aspect, this application provides a communication apparatus, including: a transceiver module, configured to perform sending and receiving operations of the access node according to the first aspect; and a processing module, configured to perform a processing operation of the access node according to the first aspect.

In this embodiment of this application, the communication apparatus may be the access node or a part that can be configured on the access node. The transceiver module and the processing module of the communication apparatus are configured to implement a sending/receiving function and a processing function of the access node. The transceiver module is configured to perform a sending operation and a receiving operation of the access node in the foregoing method embodiments. The processing module is configured to perform other operations than the sending and receiving operations on the access node in the foregoing method embodiments.

In a possible implementation, the transceiver module is specifically configured to send first traffic to a first core network device in a core network through a first service plane of a bearer network. The transceiver module is further specifically configured to send second traffic to a second core network device in the core network through a second service plane of the bearer network. The first service plane and the second service plane are independent all-active service planes in the bearer network.

In a possible implementation, when the first service plane is faulty, the transceiver module is further configured to switch the first traffic from the first service plane to the second service plane.

In a possible implementation, the access node is connected to the first service plane through a first pseudo wire, and the access node is connected to the second service plane through a second pseudo wire. The processing module is specifically configured to determine, according to a first access control list ACL rule, to forward a first packet through the first pseudo wire. A destination IP address of the first packet is an address of the first core network device.

In a possible implementation, the processing module is specifically configured to determine, according to a second ACL rule, to forward a second packet through the second pseudo wire. A destination IP address of the second packet is an address of the second core network device.

In a possible implementation, the transceiver module is further configured to obtain a first route to the first core network device. The first route includes a first routing prefix and a first next hop. An IP address of the first core network device matches a destination network segment of the first routing prefix, and the first next hop is a first aggregation node on the first service plane. The transceiver module is further configured to obtain a second route to the second core network device. The second route includes a second routing prefix and a second next hop. An IP address of the second core network device matches a destination network segment of the second routing prefix, and the second next hop is a second aggregation node on the second service plane.

In a possible implementation, the transceiver module is further configured to: receive the first packet, and forward the first packet to the first aggregation node based on the first route. A destination address of the first packet is the IP address of the first core network device.

In a possible implementation, the transceiver module is further configured to: receive the second packet, and forward the second packet to the second aggregation node based on the second route. A destination address of the second packet is the IP address of the second core network device.

According to a sixth aspect, this application provides a communication apparatus. The communication apparatus is an aggregation node on a first service plane, and includes: a transceiver module, configured to forward, to a first core node, a first packet sent by an access node. A destination IP address of the first packet is a first core network device, and the first core node belongs to the first service plane. The transceiver module is further configured to forward, to a second core node via an aggregation node on a second service plane, a second packet sent by the access node. A destination IP address of the second packet is a second core network device, and the second core node belongs to the second service plane. The first service plane and the second service plane are independent all-active service planes in a bearer network.

According to a seventh aspect, this application provides a communication apparatus, including: a transceiver module, configured to perform sending and receiving operations of the first aggregation node according to the fourth aspect.

In a possible implementation method, the transceiver module is specifically configured to obtain a first route to a first core network device. The first route includes a first routing prefix and a first next hop. An IP address of the first core network device matches a destination network segment of the first routing prefix, and the first next hop is a first core node on a first service plane. The transceiver module is further specifically configured to obtain a second route to the first core network device. The second route includes the first routing prefix and a second next hop. The second next hop is a third core node on the first service plane, and a priority of the first route is higher than a priority of the second route. The transceiver module is further specifically configured to obtain a third route to a second core network device. The third route includes a second routing prefix and a third next hop. An IP address of the second core network device matches a destination network segment of the second routing prefix, and the third next hop is a second core node on a second service plane. The transceiver module is further specifically configured to obtain a fourth route to the second core network device. The fourth route includes the second routing prefix and a fourth next hop. The fourth next hop is a fourth core node on the second service plane, a priority of the fourth route is higher than a priority of the third route, and the priority of the second route is higher than the priority of the fourth route. The first service plane and the second service plane are independent all-active service planes in a bearer network. The first service plane includes a first aggregation node, the first core node, and the third core node. The second service plane includes a second aggregation node, the second core node, and the fourth core node. The first core node is an active core node on the first service plane, and the third core node is a standby core node on the first service plane. The second core node is an active core node on the second service plane, and the fourth core node is a standby core node on the second service plane.

According to an eighth aspect, this application provides a computer-readable storage medium. The computer storage medium may be non-volatile. The computer storage medium stores computer-readable instructions. When the computer-readable instructions are executed by a processor, the method according to any one of the implementations in any one of the foregoing aspects is implemented.

According to a ninth aspect, this application provides a computer program product including instructions. When the computer program product runs on a computer, the computer is enabled to perform the method according to any one of the implementations in any one of the foregoing aspects.

According to a tenth aspect, this application provides a chip system. The chip system includes a processor and an interface circuit, and is configured to support a network device in implementing a function in any one of the foregoing aspects, for example, sending or processing data and/or information in the foregoing methods. In a possible design, the chip system further includes a memory. The memory is configured to store program instructions and data that are necessary for the network device. The chip system may include a chip, or may include the chip and another discrete component.

According to an eleventh aspect, this application provides a communication apparatus, including a communication interface; and a processor connected to the communication interface. Based on the communication interface and the processor, the communication apparatus is enabled to perform the method according to the first aspect.

According to the foregoing technical solutions, it may be learned that embodiments of this application have the following advantages:

According to the data transmission method provided in embodiments of this application, data transmitted to the core network devices is split at the access node, and transmitted to the corresponding core network devices through different service planes. Because traffic corresponding to the core network devices is transmitted through different paths, when a session of one of the core network devices is interrupted, the control plane device in the core network may switch the service to another service plane and re-establish the session via another core network device. Compared with a method for splitting data at a core node in the conventional technology, the service reliability in this method may not depend on the device reliability. Even if one transmission path (one service plane) is completely interrupted, the service data may still be transmitted by another user plane device through another transmission path. This improves reliability of data transmission.

### BRIEF DESCRIPTION OF DRAWINGS

FIG. 1 is a schematic diagram of a structure of a common LTE bearer network;
FIG. 2 is a schematic diagram of a structure of a common 5G bearer network;
FIG. 3 is a schematic diagram of a fault of a common LTE bearer network;
FIG. 4 is a schematic diagram of another fault of a common LTE bearer network;
FIG. 5 is a flowchart of a data transmission method according to an embodiment of this application;
FIG. 6 is a schematic diagram of a structure of an LTE bearer network according to an embodiment of this application;
FIG. 7 is a schematic diagram of a structure of a 5G bearer network according to an embodiment of this application;
FIG. 8 is a schematic diagram of route advertisement of an LTE bearer network according to an embodiment of this application;
FIG. 9 is a schematic diagram of route advertisement of a 5G bearer network according to an embodiment of this application;
FIG. 10 is a schematic diagram of service recovery for a first fault type in an LTE bearer network according to an embodiment of this application;
FIG. 11 is a schematic diagram of service recovery for a second fault type in an LTE bearer network according to an embodiment of this application;
FIG. 12 is a schematic diagram of service recovery for a third fault type in an LTE bearer network according to an embodiment of this application;
FIG. 13 is a schematic diagram of service recovery for a first fault type in a 5G bearer network according to an embodiment of this application;
FIG. 14 is a schematic diagram of service recovery for a second fault type in a 5G bearer network according to an embodiment of this application;
FIG. 15 is a schematic diagram of a structure of a communication apparatus according to an embodiment of this application;
FIG. 16 is a schematic diagram of a structure of a communication apparatus according to an embodiment of this application; and
FIG. 17 is a schematic diagram of a structure of a communication apparatus according to an embodiment of this application.

### DESCRIPTION OF EMBODIMENTS

Embodiments of this application provide a data transmission method and a related device. Division is performed on a bearer network to obtain service planes, so that a core network device performs data transmission through an independent service plane. When a service plane is faulty or a corresponding core network device is faulty, a session of the core network device is interrupted. Data transmitted on the service plane may be switched to another service plane. A normal service plane and a corresponding core network device re-establish the session and execute the service, so that network reliability is improved.

To make objectives, technical solutions, and advantages of this application clearer, the following describes embodiments of this application with reference to the accompanying drawings. It is clear that the described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, so that the embodiments described herein can be implemented in other orders than the order illustrated or described herein. In addition, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings, direct couplings, or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected based on actual requirements to achieve the objectives of the solutions of this application.

An IP bearer network includes a long term evolution (long term evolution, LTE) network and a 5G bearer network. A basic working principle of the IP bearer network is to use a virtual private network (virtual private network, VPN) technology such as a layer 2 virtual private network (layer 2 virtual private network, L2VPN) or a layer 3 virtual private network (layer 3 virtual private network, L3 VPN) to establish a data tunnel between a base station and a core network.

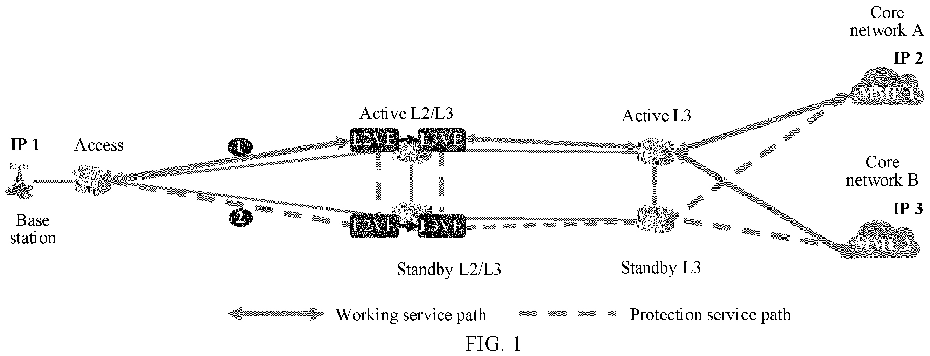

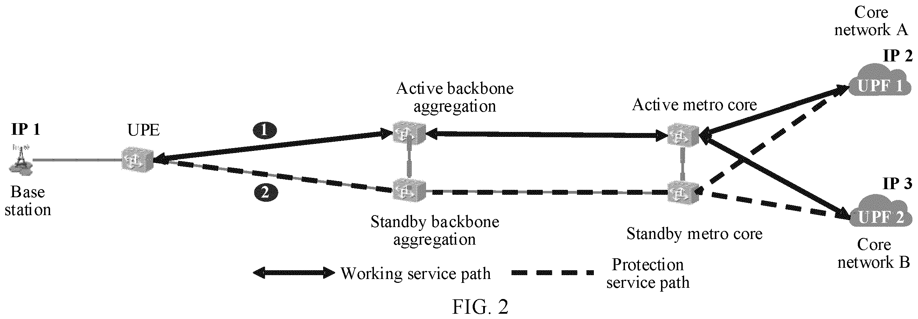

FIG. 1 is a schematic diagram of a structure of a common LTE bearer network, and FIG. 2 is a schematic diagram of a structure of a common 5G bearer network. For example, the LTE bearer network is in an L2VPN+L3 VPN networking form, and the 5G bearer network is in a hierarchical L3 VPN networking form.

An access node and a UPE node may be collectively referred to as an access node. An L2/L3 (a layering node for converting the L2VPN to the L3 VPN) node and a backbone aggregation node may be collectively referred to as an aggregation node. An L3 (L3VPN) node and a metro core node may be collectively referred to as a core node. An MME (mobility management entity, mobility management entity) and a UPF (user plane function, user plane function) are devices in a core network.

Aggregation nodes and core nodes usually exist in pairs in a form of active and standby nodes. A path passing through the active node is a working service path (indicated by solid lines in FIG. 1 or FIG. 2), and a path passing through the standby node is a protection service path (indicated by dashed lines in FIG. 1 or FIG. 2). When the working service path is faulty, protection switching is triggered, and data is transmitted through the protection service path, to ensure service availability. For example, a core network device A and a core network device B in a core network each establish connection tunnels with an active core node and a standby core node, and the core network device A and the core network device B preferentially perform data transmission via the active core node. When the active core node is faulty or a link from the active core node to an active aggregation node is faulty, protection switching is triggered. In this case, the core network device A and the core network device B perform data transmission via the standby core node. It should be noted that the core network device A and the core network device B may include one core network device, or may be a core network device group including a plurality of core network devices. In embodiments of this application, core network devices are classified into the core network device A and the core network device B, to indicate core network devices for transmission of different data.

A condition for triggering the protection switching is that a transmission fault is detected by using a VPN service detection technology. Common VPN service detection technologies include operation, administration, and maintenance (operation, administration, and maintenance, OAM), bidirectional forwarding detection (bidirectional forwarding detection, BFD), and the like. A basic working principle of the VPN service detection technologies is that a connectivity detection protocol packet is periodically sent, and a remote end reports an alarm based on a quantity of packets received within a periodicity. However, the service detection technologies such as the OAM and the BFD have detection blind spots, for example, a silent fault mode such as losses of a small quantity of packets, a modification to a packet, a specific packet format, a length, and an unavailable priority. In addition, even if the transmission fault is detected by using the service detection technology, if software and hardware related to a corresponding service protection technology fail, a switching function fails, and a case in which switching is not performed during the fault, a case in which false switching is performed in a normal state, and other cases may occur. Consequently, an expected protection effect cannot be achieved.

Further, a control plane device and a user plane device in the core network are usually deployed separately. When a terminal user uses an application, a session request is first initiated to an access management device (access management function, AMF) via a base station, and the AMF specifies a session management device (Session Management Function, SMF). Finally, the SMF specifies a user plane device to complete session creation. The control plane device and user plane device in the core network are usually deployed in a form of a pool (pool), and members in the pool protect each other. When one user plane device member is faulty or a session is interrupted, the control plane device automatically attempts to switch a service to another user plane device for protection. However, if the session of the user plane device is interrupted due to a fault on a transmission path of a bearer network, because both the core network device A and the core network device B perform data transmission through a same path, as long as the path is faulty and switching fails, sessions of the core network A and core network B are interrupted at the same time, and there is no available core network device to which services are switched. As a result, the services are continuously interrupted until the path fault is rectified.

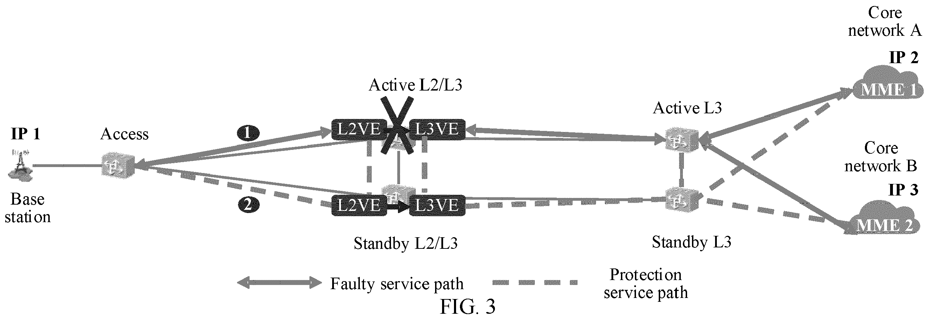

The LTE bearer network is used as an example. As shown in FIG. 3, a silent fault occurs on a VPN side of an active L2/L3 node. In this case, a protection switching function fails, and a service is continuously interrupted.
(1) VPN forwarding inside the active L2/L3 device is faulty, but no tunnel OAM alarm is reported. The service does not trigger switching.
(2) In an uplink direction, both traffic sent to a core network A and traffic sent to a core network B are sent to the active L2/L3 node through a pseudo wire (pseudo wire, PW) 1, and the service is interrupted.
(3) In a downlink direction, traffic from the core networks A and B is preferentially sent to an active L3 node or loaded to active and standby L3 nodes, then to the active L2/L3 node, and the downlink traffic is also interrupted.
(4) In this case, a control plane device detects that user sessions of two core network devices are interrupted, and attempts to re-create the sessions. However, the sessions fail to be created because the active L2/L3 device is used in any attempt. As a result, the service is continuously interrupted.

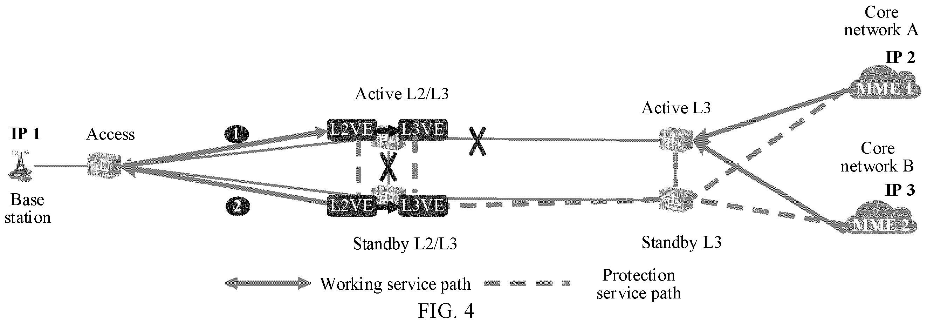

As shown in FIG. 4, when there are a plurality of faults on service paths, a protection switching function fails, and a service is continuously interrupted.
(1) An uplink and a horizontal link of an active L2/L3 device are faulty, and the active L2/L3 device is disconnected from the active L3 device.
(2) In an uplink direction, both traffic sent to a core network A and traffic sent to a core network B are sent to the active L2/L3 node through a PW 1, and the service is interrupted because both a link connected to an active L3 node and a link connected to a standby L3 node are interrupted.
(3) In a downlink direction, traffic from the core networks A and B is preferentially sent to the active L3 node or loaded to the active and standby L3 nodes, then to a standby L2/L3 node, and returned to a base station.
(4) In this case, a control plane device detects that user sessions of two core network devices are interrupted, and attempts to re-create the sessions. However, the sessions fail to be created because the active L2/L3 device is used in any attempt. As a result, the service is continuously interrupted.

Therefore, a related technology is essentially a passive redundancy technology. The passive redundancy technology is bound to be restricted by a fault detection rate and a switching success rate, and has insufficient reliability.

To resolve the foregoing problem, a first aspect of this application provides a data transmission method.

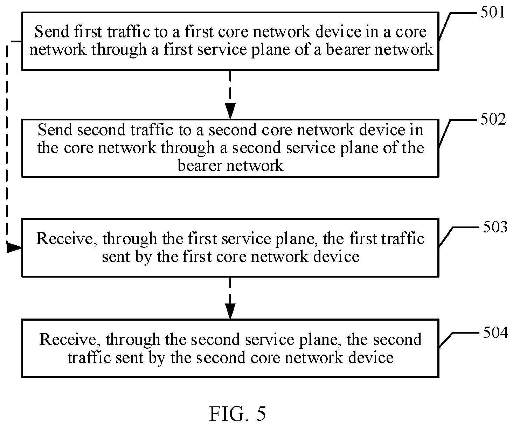

FIG. 5 is a flowchart of a data transmission method according to an embodiment of this application. It should be noted that method steps in the accompanying drawings are independent of each other. This embodiment of this application provides only one possible execution sequence of the method steps. The execution sequence of the method steps may change during actual application, and the execution sequence of the method steps is not limited in embodiments of this application.

The method is performed by an access node in a bearer network. The access node is a node located at an access stratum of the bearer network. The access node is communicatively connected to a base station, receives a data flow sent by the base station, and transmits the data flow to a core network device via nodes at an aggregation layer and a core layer of the bearer network. In addition, the access node is further configured to: receive a data flow of the core network device via the nodes at the core layer and the aggregation layer of the bearer network, and send the data flow to the base station.

Refer to FIG. 5. The data transmission method provided in this embodiment of this application includes the following steps.

501: Send first traffic to a first core network device in a core network through a first service plane of the bearer network.

502: Send second traffic to a second core network device in the core network through a second service plane of the bearer network.

The first service plane and the second service plane are independent all-active service planes in the bearer network.

It should be noted that the first core network device and the second core network device represent core network devices for transmission of different data, and each may be represented as a single core network device or may be represented as a core network device group. A service plane is an independent data transmission plane in the bearer network, and includes a transmission path including nodes and links. In this embodiment, plane division is performed for the bearer network based on the core network device, so that each core network device is corresponding to one independent service plane. The service plane is configured to transmit a data flow required by the core network device to execute a service.

It may be understood that, in the core network, when a core network device or a session is interrupted, a control plane device in the core network automatically attempts to switch a service originally processed on the core network device to another available core network device. Therefore, in this embodiment of this application, data transmitted to the core network device is split at the access node, and is transmitted to corresponding core network devices through different service planes. Because traffic corresponding to the core network devices is transmitted through different paths, when a session of one of the core network devices is interrupted, the control plane device in the core network may switch the service to another core network device, and re-establish the session through the service plane corresponding to the core network device. Compared with a method for splitting the data at a core node in a conventional technology, service reliability in this method may not depend on device reliability. Even if one transmission path (one service plane) is completely interrupted, service data may still be transmitted by another user plane device through another transmission path. This improves reliability of data transmission.

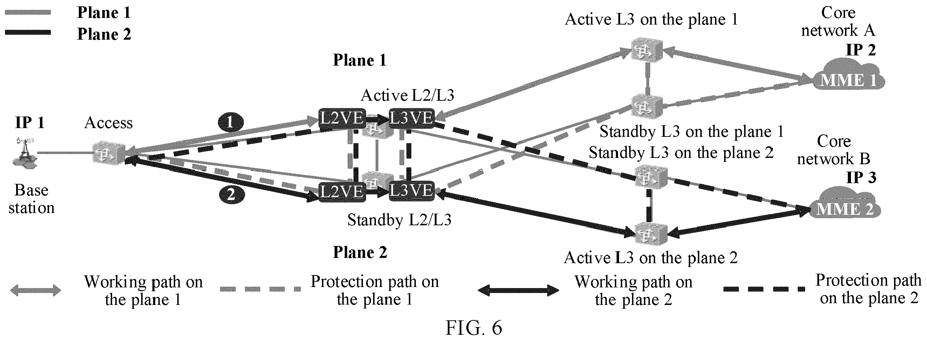

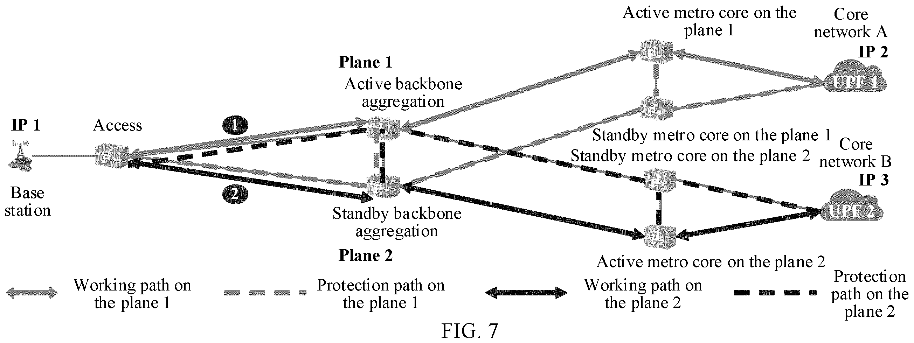

The data transmission method provided in this embodiment of this application may be specifically applied to an IT bearer network. An LTE bearer network and a 5G bearer network are used as examples. FIG. 6 is a schematic diagram of a structure of the LTE bearer network according to an embodiment of this application, and FIG. 7 is a schematic diagram of a structure of the 5G bearer network according to an embodiment of this application. For example, the LTE bearer network is in a L2VPN+L3VPN networking form, and the 5G bearer network is in a hierarchical L3 VPN networking form. A plane 1 is the first service plane, and a plane 2 is the second service plane.

The base station sends traffic data to the access node. The traffic data includes the first traffic and the second traffic, the first traffic is used by the first core network device to perform a first service, and the second traffic is used by the second core network device to perform a second service.

After receiving the first traffic and the second traffic, the access node sends the first traffic from the first service plane (a plane 1) to the first core network device (an MME 1 in a core network A or a UPF 1 in the core network A), and sends the second traffic from the second service plane (a plane 2) to the second core network device (an MME 2 in a core network B or a UPF 2 in the core network B). Traffic corresponding to the two core network devices is split after passing through the access node, and the first traffic and the second traffic are respectively transmitted to different core network devices through different paths. The control plane device in the core network continuously monitors a status of each device in a core network resource pool. Therefore, when the control plane device detects that the first service of the first core network device is continuously damaged, but the second service of the second core network device is normally forwarded, it indicates that the first service plane may be damaged or the first core network device may be faulty. In this case, the control plane device attempts to switch the first service on the first core network device to the second core network device, and re-creates a session on the second core network device. Because the re-created session passes through only the second service plane, the session can be successfully created, and the first service is recovered on the second core network device. It should be noted that in this embodiment of this application, the core network resource pool is divided into two groups of core network devices, and the two groups of core network devices and two service planes respectively corresponding to the two groups of core network devices are described. Actually, there may alternatively be a plurality of groups of core network devices, and each group is corresponding to one service plane. When a session is interrupted due to a fault of a service plane or of a corresponding core network device, a service corresponding to the core network device may be switched to any available core network device based on an indication of the core network control plane device to re-establish the session. Therefore, a solution in which the plurality of core network groups are corresponding to a plurality of service planes is also within the protection scope of this application. A specific quantity of groups and a quantity of corresponding service planes are not limited in this application.

Refer to FIG. 6. In a possible implementation method, when a session of the device MME 1 in the core network A is interrupted, transmission on the plane 1 may be faulty. The control plane device detects that a service of the device MME 2 in the core network B is normally performed. Therefore, the control plane device attempts to switch the first service on the MME 1 in the core network A to the MME 2 in the core network B, and re-establishes the session on the MME 2. The re-created session passes through the plane 2, and the plane 2 is normal. Therefore, the session can be successfully created. In this case, the first service is recovered on MME 2. Similarly, in the bearer network shown in FIG. 7, a session may also be created in this manner. Details are not described herein again.

Therefore, the session of the first core network device is interrupted because the first service plane is faulty. In this case, the access node switches the first traffic from the first service plane to the second service plane.

It should be noted that a fault of the first service plane means that a node on the first service plane is faulty or a link is disconnected. If an active node and a standby node exist on the first service plane, the fault of the first service plane also includes session interruption caused by a case in which both the active node and the standby node are faulty at the same time, a switching function fails when the active node is faulty, false switching occurs when the active node is normal, or the like.

When the first service plane is faulty, the first core network device cannot receive the first traffic through the first service plane. Therefore, to ensure service availability, the access node switches the first traffic to the second service plane. In this way, the second core network device performs, by using the first traffic, a first service that is originally to be performed on the first core network device. It may be understood that, when the first service plane is faulty, the second core network device not only performs the first service by using the first traffic, but also performs the second service by using the second traffic.

The foregoing is a method for sending traffic by the access node when a transmission direction is uplink. Correspondingly, the method performed by the access node further includes receiving downlink traffic and sending the downlink traffic to the base station, and specifically includes the following steps.

503: Receive, through the first service plane, the first traffic sent by the first core network device.

504: Receive, through the second service plane, the second traffic sent by the second core network device.

Similarly, the method further includes: When the first service plane is faulty, the access node receives the first traffic switched from the first service plane to the second service plane.

When the first service plane is faulty, the first core network device cannot send the first traffic through the first service plane. As a result, a session is interrupted. After the session of the first core network device is interrupted, the control plane device in the core network searches for a core network device on which a service is normally performed: the second core network device. In this case, the control plane device in the core network switches the first service corresponding to the first traffic to the second core network device, and the second core network device sends the first traffic to the access node through the second service plane, so that the access node sends the first traffic to the base station, and the service recovers.

In a possible implementation method, the bearer network includes a first aggregation node and a second aggregation node.

When nodes and links in the bearer network normally work and a traffic transmission direction is uplink, the two aggregation nodes separately perform the following method: The first aggregation node sends, to the first core network device, the first traffic sent by the access node. The second aggregation node sends, to the second core network device, the second traffic sent by the access node.

When the traffic transmission direction is downlink, the two aggregation nodes separately perform the following method: The first aggregation node sends, to the access node, the first traffic sent by the first core network device. The second aggregation node sends, to the access node, the second traffic sent by the second core network device.

FIG. 6 is used as an example. The plane 1 includes an active L2/L3 node, and the plane 2 includes a standby LE/L3 node. The active L2/L3 node sends, to the MME 1, the first traffic sent by the access node, and further sends traffic of the MME 1 to the access node. The standby L2/L3 node sends, to the MME 2, the second traffic sent by the access node, and further sends traffic of the MME 2 to the access node. Similarly, an active backbone aggregation node and a standby backbone aggregation node in the bearer network shown in FIG. 7 also perform the same method. Details are not described herein.

Further, the first aggregation node is an active aggregation node on the first service plane, and the second aggregation node is a standby aggregation node on the first service plane. The second aggregation node is an active aggregation node on the second service plane, and the first aggregation node is a standby aggregation node on the second service plane.

The aggregation node is a node located at an aggregation layer in the bearer network. In this embodiment of this application, the two aggregation nodes are also the active/standby nodes of each other on the two service planes. Protection switching is triggered when one of the aggregation nodes is faulty or a link connected to the aggregation node is faulty, and the other aggregation node is configured to perform transmission instead of the aggregation node. For example, when the link between the first aggregation node and the access node is faulty, the first traffic may be sent to the first aggregation node via the second aggregation node, and transmitted from the first service plane to the first core network device. Alternatively, when the first aggregation node device is faulty, the first traffic may still be sent to another node on the first service plane via the second aggregation node, and finally the first traffic is still sent to the first core network device. It may be understood that, in this application, a connection manner in which aggregation nodes exist in pairs and protect each other is retained. For the first service plane, the second aggregation node is a protection node of the first aggregation node. When the first aggregation node is faulty or a link connected to the first aggregation node is interrupted, node-level protection switching and link-level protection switching are triggered to switch the first traffic transmitted by the first aggregation node to the second aggregation node. Because the first service plane is not faulty, the first traffic is still returned to the first service plane, and a destination address is the first core network device.

With reference to the accompanying drawings, FIG. 6 is used as an example. The active L2/L3 node is a node on a working path of the plane 1, and is also a node on a protection path of the plane 2. In addition, the standby L2/L3 node is a node on a working path of the plane 2, and is also a node on a protection path of the plane 1. Therefore, the two L2/L3 nodes are the active/standby nodes of each other on the two planes. When one of the L2/L3 nodes is faulty or a link connected to the L2/L3 node is faulty, protection switching is triggered, and the other L2/L3 node is used to perform transmission instead of the L2/L3 node. Similarly, the active backbone aggregation node and the standby backbone aggregation node in the bearer network shown in FIG. 7 are also mutual protection nodes. Details are not described herein.

In a possible implementation method, the first service plane includes a first core node, and the second service plane includes a second core node. The access node is connected to the first core network device via the first aggregation node and the first core node. The access node is connected to the second core network device via the second aggregation node and the second core node.

The core node is a node located at a core layer in the bearer network. The first core node belongs to the first service plane, and the second core node belongs to the second service plane. The first core node is communicatively connected to the first aggregation node and the first core network device separately, and the second core node is communicatively connected to the second aggregation node and the second core network device separately.

FIG. 6 is used as an example. The plane 1 includes an active L3 node on the plane 1, and the plane 2 includes an active L3 node on the plane 2. The active L3 node on the plane 1 and the active L3 node on the plane 2 are respectively core nodes on the two planes. The access node is connected to the MME 1 via the active L2/L3 node on the plane 1 and the active L3 on the plane 1, and the access node is further connected to the MME 2 via the standby L2/L3 node on the plane 2 and the active L3 on the plane 2. Similarly, connection manners of an active metro core node on the plane 1 and an active metro core node on the plane 2 in the bearer network shown in FIG. 7 are the same as that described above. Details are not described herein. When the nodes and the links in the bearer network normally work and the traffic transmission direction is uplink, the two core nodes separately perform the following method: The first core node receives the first traffic sent by the first aggregation node, and forwards the first traffic to the first core network device. The second core node receives the second traffic sent by the second aggregation node, and forwards the second traffic to the second core network device.

When the traffic transmission direction is downlink, the two aggregation nodes separately perform the following method: The first core node receives the first traffic sent by the first core network device, and forwards the first traffic to the first aggregation node. The second core node receives the second traffic sent by the second core network device, and forwards the second traffic to the second aggregation node.

In this embodiment of this application, the first core node and the second core node are no longer in an active/standby mode, but are respectively active core nodes on two service planes. Traffic is not split at the core node, but is directly sent to a corresponding core network device. This embodiment provides a method for implementing plane-level through changing only a connection manner without changing a node device in the bearer network during a fault.

FIG. 6 is used as an example. The core node is a traffic forwarding node between the aggregation node and the core network device. To be specific, the L3 node on the plane 1 forwards, to the MME 1, traffic sent by the L2/L3 node on the plane 1, and the L3 node on the plane 2 forwards, to the MME 2, traffic sent by the L2/L3 node on the plane 2. Forwarding of downlink traffic for transmission is similar. It may be understood that the active metro core node on the plane 1 and the active metro core node on the plane 2 in the bearer network shown in FIG. 7 also performs the same method. Details are not described herein.

In a possible implementation method, the first service plane further includes a third core node, and the second service plane further includes a fourth core node. The first core node is an active core node on the first service plane, and the third core node is a standby core node on the first service plane. The second core node is an active core node on the second service plane, and the fourth core node is a standby core node on the second service plane.

To improve reliability of data transmission at the core nodes, a protection node may be set for the active core node on the service plane. To be specific, the third core node is a protection node of the first core node, and the fourth core node is a protection node of the second core node. Specifically, the third core node is communicatively connected to the second aggregation node, and the fourth core node is communicatively connected to the first aggregation node. When transmission between the first aggregation node and the first core node is faulty, in an uplink direction of traffic transmission, the second aggregation node sends, to the third core node, the first traffic sent by the access node; and in a downlink direction of the traffic transmission, the second aggregation node sends the first traffic to the access node via the third core node. It may be understood that, when a node or a link on the first service plane is faulty, if a path from the access node to the first core network device can be re-established on the first service plane through automatic switching or rerouting, plane switching does not need to be performed. That is, the first traffic is still transmitted by a node on the first service plane to the first core network device.

In this embodiment of this application, on the basis of a service-level protection technology implemented through protection switching for a node-level fault and a link-level fault of a current bearer network, a plane-level protection technology from the access node to the core network is also used. The plane-level protection type is technically heterogeneous from the original service-level protection switching technology. Effective positions and application technologies of the plane-level protection and the service-level protection are completely different, and a probability that the plane-level protection technology and the service-level protection technology fail at the same time is very low. After the method provided in this embodiment of this application is used, in principle, except for poor-quality faults and common-cause faults, service availability no longer depends on device reliability. When a plane is completely interrupted, a service is not affected, and network reliability is greatly improved.

With reference to the accompanying drawings, FIG. 6 is used as an example. The standby L3 node on the plane 1 is a protection node of the active L3 node on the plane 1, and the standby L3 node on the plane 2 is a protection node of the active L3 node on the plane 2. The standby L3 node on the plane 1 is communicatively connected to the standby L2/L3 node, and the standby L3 node on the plane 2 is communicatively connected to the active L2/L3 node. When transmission between the active L2/L3 node and the active L3 node on the plane 1 is faulty, in the uplink direction of the traffic transmission, the standby L2/L3 node sends, to the standby L3 node on the plane 1, the first traffic sent by the access node; and in the downlink direction of the traffic transmission, the standby L2/L3 node sends the first traffic to the access node via the standby L3 node on the plane 1. It may be understood that, when a node or a link on the plane 1 is faulty, if a path from the access node to the MME 1 may be re-established on the plane 1 through automatic switching or rerouting, plane switching does not need to be performed. That is, the first traffic is still transmitted to the MME 1 via another node on the plane 1. Similarly, in the bearer network shown in FIG. 7, the standby metro core node on the plane 1 is a protection node of active metro core node on the plane 1, and the standby metro core node on the plane 2 is a protection node of the active metro core node on the plane 2. A path may be re-established on the plane through automatic switching or rerouting. Details are not described herein.

In different networking, the access node implements splitting by using different configuration methods. This embodiment of this application provides two methods for implementing splitting by the access node in two networking cases, including implementing splitting by configuring an access control list (access control list, ACL) function, and implementing splitting by configuring routing information. Details are as follows.

Splitting method 1: InL2VPN+L3VPN networking, the access node implements splitting by configuring ACLs.

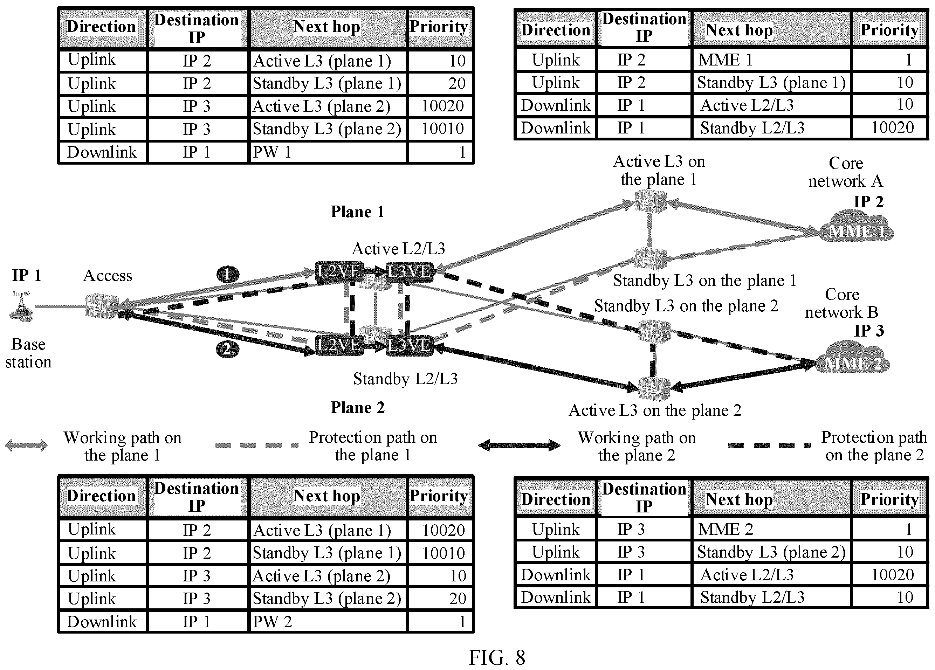

With reference to the accompanying drawings, refer to FIG. 8. When the data transmission method provided in this embodiment of this application is applied to the LTE bearer network, where for example, the LTE bearer network is L2VPN+L3VPN networking, the access node may split, by using an ACL function, data sent by the base station to different core network devices.

First, pseudowire emulation edge-to-edge (pseudowire emulation edge-to-edge, PWE3) to each service plane needs to be created on the access node. To be specific, the access node is connected to the first service plane through a first pseudo wire, and the access node is connected to the second service plane through a second pseudo wire. Specifically, the access node is connected to the first aggregation node through the first pseudo wire PW 1, and the access node is connected to the second aggregation node through the second pseudo wire PW 2.

After the first pseudo wire and the second pseudo wire are created, a destination IP address of a core network device is directed to a corresponding pseudo wire based on an ACL. This includes:

The access node determines, according to a first ACL rule, to forward a first packet through the first pseudo wire. A destination IP address of the first packet is an address of the first core network device. Further, the access node determines, according to a second ACL rule, to forward a second packet through the second pseudo wire. A destination IP address of the second packet is an address of the second core network device.

It may be understood that the access node performs, by using the ACL function, matching based on a destination IP address (DIP) of a service packet on an L2VPN service; directs a packet with a destination address IP 2 (IP address list of the first core network device corresponding to the first service plane) to the PW 1; and directs a packet with a destination address IP 3 (IP list of the second core network device corresponding to the second service plane) to the PW 2.

The access node forwards packets based on configuration information of the ACLs. In this way, the first traffic is sent to the first core network device through the first service plane, and the second traffic is sent to the second core network device through the second service plane.

Preferably, cross protection (cross protection switching, CPS) may be deployed on the PW 1 and the PW 2. A main difference from a conventional protection type is that, in this embodiment of this application, states of the PW 1 and the PW 2 are active and active instead of active and standby. In addition, the two pseudo wires protect each other. When transmission of one of the pseudo wires is faulty, traffic may be switched, through tunnel-level protection such as APS, FPS, and rerouting or switching between L2/L3 pseudo wires that are connected to each other, to the other pseudo wire for transmission. In this way, a service is recovered. For example, when the PW 1 is faulty, the access node sends the first traffic to the first aggregation node via the second aggregation node. After receiving the first traffic, the first aggregation node continues to send the first traffic to the first core network device through an original path.

Splitting method 2: In L3 VPN-to-edge networking, the access node splits traffic by configuring routing information.

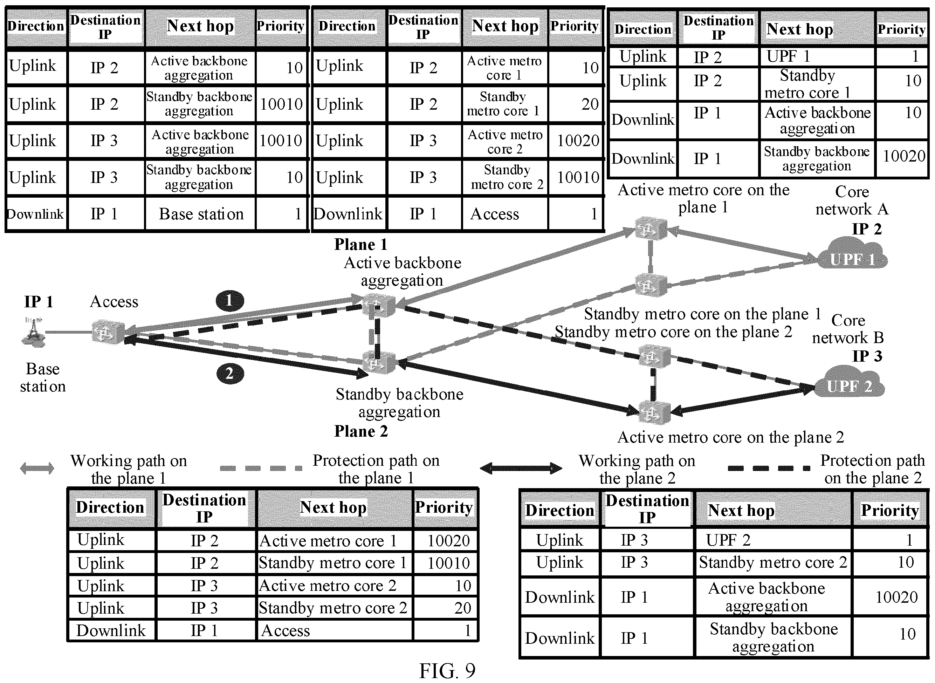

With reference to the accompanying drawings, refer to FIG. 9. When the data transmission method provided in this embodiment of this application is applied to the 5G bearer network, where for example, the 5G bearer network is L3VPN-to-edge networking, after accessing traffic from the base station, the access node may perform splitting and forwarding based on a destination IP address, and directly performs splitting through routing without needing to perform splitting by using the ACL function. Details are as follows.

First, a layering node of an L3VPN to a metro core is divided into two working planes. The two working planes are independent of each other as much as possible. In a normal case, service-level protection and node-level protection are implemented on the plane (where a cross-domain emergency tunnel may be retained, but a corresponding route has a low priority).

After the working plane is obtained through division, the core network resource pool is divided into two groups, and the two groups are connected to metro core devices on the two planes respectively. In this case, the access node splits traffic based on the destination IP addresses of the packets by configuring a routing table.

The access node obtains a first route to the first core network device. The first route includes a first routing prefix and a first next hop. An IP address of the first core network device matches a destination network segment of the first routing prefix, and the first next hop is the first aggregation node on the first service plane.

The access node obtains a second route to the second core network device. The second route includes a second routing prefix and a second next hop. An IP address of the second core network device matches a destination network segment of the second routing prefix, and the second next hop is the second aggregation node on the second service plane.

It may be understood that, after receiving the first route and the second route, the access node splits and forwards, based on the destination IP addresses of the traffic, the traffic accessed from the base station.

The access node receives a first packet, and forwards the first packet to the first aggregation node based on the first route. A destination address of the first packet is the IP address of the first core network device.

Further, the access node receives a second packet, and forwards the second packet to the second aggregation node based on the second route. A destination address of the second packet is the IP address of the second core network device.

It may be understood that, the first traffic whose destination IP address is the first core network device is sent to a core network on the plane 1 (a session established with the UPF 1), and the first traffic is sent to an upper active backbone aggregation node (the first aggregation node) through a link 1; and the second traffic whose destination IP address is the second core network device is sent to a core network on the plane 2 (a session established with the UPF 2), and the second traffic is sent to a lower standby backbone aggregation node (the second aggregation node) through a link 2, to achieve path separation.

For a specific implementation, refer to a routing table of the access node in FIG. 9. The 1^{st} entry and the 4^{th} entry in the routing table are a route to the UPF 1 and a route to the UPF 2 respectively, and have a same priority. A routing prefix of the 1^{st} entry matches an IP address IP 2 of the UFP 1, and a next hop is the active backbone aggregation node. A routing prefix of the 4^{th} entry matches an IP address IP 3 of the UFP 2, and a next hop is the backup backbone aggregation node. To enable the access node to forward a packet whose destination IP address is the IP 2 to the active backbone aggregation node based on the 1^{st} entry in the routing table, and forward a packet whose destination IP address is the IP 3 to the standby backbone aggregation node based on the 4^{th} entry in the routing table, a priority of a route of another node that is the next hop is in the routing table may be adjusted to a low priority. For example, a specific implementation method includes: defining a value of a priority of a cross-plane route to be increased by 10000. To be specific, when a value of a priority of the 1^{st} entry in the routing table is 10, a value of a priority of the 2^{nd} entry in the routing table is 10010. It may be understood that a higher value of the priority of the route indicates a lower priority. Similarly, a value of a priority of the 3^{rd} entry in the routing table is 10010, and a value of a priority of the 4^{th} entry in the routing table is 10. The 1^{st} entry and the 4^{th} entry in the routing table are respectively corresponding to the first route and the second route in the foregoing embodiment of this application. It may be understood that the 5^{th} entry in the routing table represents a direct route between the access node and the base station, a destination IP address is an IP 1 corresponding to the base station, and a priority of the direct route is the highest, and is specifically 1. It should be noted that, in the foregoing embodiment of this application, the core network resource pool is divided into two groups of core network devices, and the two groups of core network devices and two service planes respectively corresponding to the two groups of core network devices are described. Actually, there may alternatively be a plurality of groups of core network devices, and each group is corresponding to one service plane. When a session is interrupted due to a fault of a service plane or of a corresponding core network device, a service corresponding to the core network device may be switched to any available core network device based on an indication of the core network control plane device to re-establish the session. Therefore, a solution in which the plurality of core network groups are corresponding to a plurality of service planes is also within the protection scope of this application. Because the multi-plane solution is similar to the dual-plane solution, only a difference is that the core network pool and the bearer network are divided into more parts. Details are not described herein. A specific quantity of groups of core network devices and a quantity of corresponding service planes are not limited in this application.

A second aspect of this application provides a communication system, including an access node, a first aggregation node, a second aggregation node, a first core node, a second core node, a first core network device, and a second core network device. The access node is connected to the first core network device via the first aggregation node and the first core node. The access node is connected to the second core network device via the second aggregation node and the second core node. The access node is configured to send first traffic to the first core network device through a first service plane. The first service plane includes the first aggregation node and the first core node. The access node is further configured to send second traffic to the second core network device through the second service plane. The second service plane includes the second aggregation node and the second core node. The first service plane and the second service plane are independent all-active service planes in a bearer network.

It should be noted that the first core network device and the second core network device represent core network devices for transmission of different data, and each may be represented as a single core network device or may be represented as a core network device group. A service plane is an independent data transmission plane in the bearer network, and includes a transmission path including nodes and links. The first service plane includes the first aggregation node and the first core node. The first service plane includes the first aggregation node and the first core node. In this embodiment, plane division is performed on the bearer network based on the core network devices, so that each core network device is corresponding to an independent service plane, and the service plane is configured to transmit a data flow required by the core network device to perform a service.

The communication system provided in this embodiment of this application may be specifically used in an IT bearer network. An LTE bearer network and a 5G bearer network are used as examples. FIG. 6 is a schematic diagram of a structure of the LTE bearer network according to an embodiment of this application, and FIG. 7 is a schematic diagram of a structure of the 5G bearer network according to an embodiment of this application.

The access node is connected to a base station, and is configured to: receive data traffic sent by the base station and send data traffic to the base station. Traffic data sent by the base station to the access node includes the first traffic and the second traffic. The first traffic is used by the first core network device (MME 1 in a core network A or UPF 1 in the core network A) to perform a first service. The second traffic is used by the second core network device (MME 2 in a core network B or UPF 2 in the core network B) to specify a second service. The access node is further connected to the first core network device through the first service plane (plane 1), is connected to the second core network device through the second service plane (plane 2), and is configured to: send the first traffic to the first core network device in a core network through the first service plane, and send the second traffic to the second core network device in the core network through the second service plane. In addition, the access node is further configured to: receive, through the first service plane, the first traffic sent by the first core network device in the core network, and receive, through the second service plane, the second traffic sent by the second core network device in the core network. In FIG. 6, the plane 1 includes an active L2/L3 node and an active L3 node on the plane 1, and the plane 2 includes a standby L2/L3 node and an active L3 node on the plane 2. The active L3 node on the plane 1 and the active L3 node on the plane 2 are respectively core nodes on the two planes. The access node is connected to the MME 1 via the active L2/L3 node on the plane 1 and the active L3 on the plane 1, and the access node is further connected to the MME 2 via the standby L2/L3 node on the plane 2 and the active L3 on the plane 2. Similarly, in the bearer network shown in FIG. 7, the plane 1 includes an active backbone aggregation node and an active metro core node on the plane 1, and the plane 2 includes an active backbone aggregation node and an active metro core node on the plane 2. Connection manners of the active metro core node on the plane 1 and the active metro core node on the plane 2 are the same as that described above. Details are not described herein.

After receiving the first traffic and the second traffic, the access node sends the first traffic from the first service plane to the first core network device, and sends the second traffic from the second service plane to the second core network device. Traffic corresponding to the two core network devices is split after passing through the access node, and the first traffic and the second traffic are respectively transmitted to different core network devices through different paths. The control plane device in the core network continuously monitors a status of each device in a core network resource pool. Therefore, when the control plane device detects that the first service of the first core network device is continuously damaged, but the second service of the second core network device is normally forwarded, it indicates that the first service plane may be damaged or the first core network device may be faulty. In this case, the control plane device attempts to switch the first service on the first core network device to the second core network device, and re-creates a session on the second core network device. Because the re-created session passes through only the second service plane, the session can be successfully created, and the first service is recovered on the second core network device. It should be noted that in this embodiment of this application, the core network resource pool is divided into two groups of core network devices, and the two groups of core network devices and two service planes respectively corresponding to the two groups of core network devices are described. Actually, there may alternatively be a plurality of groups of core network devices, and each group is corresponding to one service plane. When a session is interrupted due to a fault of a service plane or of a corresponding core network device, a service corresponding to the core network device may be switched to any available core network device based on an indication of the core network control plane device to re-establish the session. Therefore, a solution in which the plurality of core network groups are corresponding to a plurality of service planes is also within the protection scope of this application. A specific quantity of groups and a quantity of corresponding service planes are not limited in this application.

According to the data transmission method provided in embodiments of this application, data transmitted to the core network devices is split at the access node, and transmitted to the corresponding core network devices through different service planes. Because traffic corresponding to the core network devices is transmitted through different paths, when a session of one of the core network devices is interrupted, the control plane device in the core network may switch the service to another service plane and re-establish the session via another core network device. Compared with a method for splitting data at a core node in a conventional technology, service reliability in this method may not depend on device reliability. Even if one transmission path (one service plane) is completely interrupted, service data may still be transmitted by another user plane device through another transmission path. This improves reliability of data transmission.

Refer to FIG. 6. In a possible implementation method, when a session of the device MME 1 in the core network A is interrupted, transmission on the plane 1 may be faulty. The control plane device detects that a service of the device MME 2 in the core network B is normally performed. Therefore, the control plane device attempts to switch the first service on the MME 1 in the core network A to the MME 2 in the core network B, and re-establishes the session on the MME 2. The re-created session passes through the plane 2, and the plane 2 is normal. Therefore, the session can be successfully created. In this case, the first service is recovered on the MME 2. Similarly, in the bearer network shown in FIG. 7, a session may also be created in this manner. Details are not described herein again.

Therefore, when a session of the first core network device is interrupted because the first service plane is faulty, the access node is further configured to switch the first traffic from the first service plane to the second service plane.

It should be noted that the fault of the first service plane means that a node on the first service plane is faulty or a link is disconnected. If an active node and a standby node exist on the first service plane, the fault of the first service plane also includes session interruption caused by a case in which both the active node and the standby node are faulty at the same time, a switching function fails when the active node is faulty, false switching occurs when the active node is normal, or the like.

When the first service plane is faulty, the first core network device cannot receive the first traffic through the first service plane. Therefore, to ensure service availability, the access node switches the first traffic to the second service plane. In this way, the second core network device performs, by using the first traffic, the first service that is originally to be performed on the first core network device. It may be understood that, when the first service plane is faulty, the second core network device not only performs the first service by using the first traffic, but also performs the second service by using the second traffic.

In the foregoing descriptions, the access node is configured to send traffic when a transmission direction is uplink. Correspondingly, the access node is further configured to: receive downlink traffic, and send the downlink traffic to the base station.

In different networking, the access node implements splitting by using different configuration methods. This embodiment of this application provides two methods for implementing splitting by the access node in two networking cases, including implementing splitting by configuring an access control list (access control list, ACL) function, and implementing splitting by configuring routing information. Details are as follows.

Splitting method 1: In L2VPN+L3VPN networking, the access node implements splitting by configuring ACLs.

Refer to FIG. 8. When the data transmission method provided in this embodiment of this application is applied to the LTE bearer network, where for example, the LTE bearer network is L2VPN+L3VPN networking, the access node may split, by using an ACL function, data sent by the base station to different core network devices.

First, pseudowire emulation edge-to-edge (pseudowire emulation edge-to-edge, PWE3) to each service plane needs to be created on the access node. To be specific, the access node is connected to the first service plane through a first pseudo wire, and the access node is connected to the second service plane through a second pseudo wire. Specifically, the access node is connected to the first aggregation node through the first pseudo wire PW 1, and the access node is connected to the second aggregation node through the second pseudo wire PW 2.

After the first pseudo wire and the second pseudo wire are created, a destination IP address of a core network device is directed to a corresponding pseudo wire based on an ACL. In this case:

The access node is further configured to determine, according to a first ACL rule, to forward a first packet through the first pseudo wire. A destination IP address of the first packet is an address of the first core network device.

Further, the access node is further configured to determine, according to a second ACL rule, to forward a second packet through the second pseudo wire. A destination IP address of the second packet is an address of the second core network device.

It may be understood that the access node performs, by using the ACL function, matching based on a destination IP address (DIP) of a service packet on an L2VPN service; directs a packet with a destination address IP 2 (IP address list of the first core network device corresponding to the first service plane) to the PW 1; and directs a packet with a destination address IP 3 (IP list of the second core network device corresponding to the second service plane) to the PW 2.

The access node is configured to forward packets based on configuration information of the ACLs. In this way, the first traffic is sent to the first core network device through the first service plane, and the second traffic is sent to the second core network device through the second service plane.

Splitting method 2: In L3VPN-to-edge networking, the access node splits traffic by configuring the routing information.

Refer to FIG. 9. When the data transmission method provided in this embodiment of this application is applied to the 5G bearer network, where for example, the 5G bearer network is L3VPN-to-edge networking, after accessing traffic from the base station, the access node may perform splitting and forwarding based on a destination IP address, and directly performs splitting through routing without needing to perform splitting by using the ACL function. Details are as follows.

First, a layering node of an L3 VPN to a metro core is divided into two working planes. The two working planes are independent of each other as much as possible. In a normal case, service-level protection and node-level protection are implemented on the plane (where a cross-domain emergency tunnel can be retained, but a corresponding route has a low priority).

After the working plane is obtained through division, the core network resource pool is divided into two groups, and the two groups are connected to metro core devices on the two planes respectively. In this case, the access node splits traffic based on the destination IP addresses of the packets by configuring a routing table. In this case:

The access node is further configured to obtain a first route to the first core network device. The first route includes a first routing prefix and a first next hop. An IP address of the first core network device matches a destination network segment of the first routing prefix, and the first next hop is the first aggregation node on the first service plane.

The access node is further configured to obtain a second route to the second core network device. The second route includes a second routing prefix and a second next hop. An IP address of the second core network device matches a destination network segment of the second routing prefix, and the second next hop is the second aggregation node on the second service plane. It may be understood that the access node performs route flooding via the first aggregation node and the second aggregation node. After receiving the first route and the second route, the access node splits and forwards the traffic based on a destination IP address of the traffic accessed from the base station.

The access node is further configured to: receive the first packet, and forward the first packet to the first aggregation node based on the first route. A destination address of the first packet is the IP address of the first core network device.

Further, the access node is further configured to: receive the second packet, and forward the second packet to the second aggregation node based on the second route. A destination address of the second packet is the IP address of the second core network device.

It may be understood that, the first traffic whose destination IP address is the first core network device is sent to a core network on the plane 1 (a session established with the UPF 1), and the first traffic is sent to an upper active backbone aggregation node (the first aggregation node) through a link 1; and the second traffic whose destination IP address is the second core network device is sent to a core network on the plane 2 (a session established with the UPF 2), and the second traffic is sent to a lower standby backbone aggregation node (the second aggregation node) through a link 2, to achieve path separation.

It should be noted that, in the foregoing embodiment of this application, the core network resource pool is divided into two groups of core network devices, and the two groups of core network devices and two service planes respectively corresponding to the two groups of core network devices are described. Actually, there may alternatively be a plurality of groups of core network devices, and each group is corresponding to one service plane. When a session is interrupted due to a fault of a service plane or of a corresponding core network device, a service corresponding to the core network device may be switched to any available core network device based on an indication of the core network control plane device to re-establish the session. Therefore, a solution in which the plurality of core network groups are corresponding to a plurality of service planes is also within the protection scope of this application. Because the multi-plane solution is similar to the dual-plane solution, only a difference is that the core network pool and the bearer network are divided into more parts. Details are not described herein. A specific quantity of groups of core network devices and a quantity of corresponding service planes are not limited in this application.

In a possible implementation method, when nodes and links in the bearer network work normally, and when a traffic transmission direction is uplink: The first aggregation node is configured to send, to the first core node, the first traffic sent by the access node. The second aggregation node is configured to send, to the second core node, the second traffic sent by the access node.

When the traffic transmission direction is downlink: The first aggregation node is configured to send, to the access node, the first traffic sent by the first core network device. The second aggregation node is configured to send, to the access node, the second traffic sent by the second core network device.

FIG. 6 is used as an example. The plane 1 includes the active L2/L3 node, and the plane 2 includes the standby LE/L3 node. The active L2/L3 node sends, to the MME 1, the first traffic sent by the access node, and further sends the traffic of the MME 1 to the access node. The standby L2/L3 node sends, to the MME 2, the second traffic sent by the access node, and further sends the traffic of the MME 2 to the access node. Similarly, the active backbone aggregation node and the standby backbone aggregation node in the bearer network shown in FIG. 7 also perform the same method. Details are not described herein.

Further, the first aggregation node is an active aggregation node on the first service plane, and the second aggregation node is a standby aggregation node on the first service plane. The second aggregation node is an active aggregation node on the second service plane, and the first aggregation node is a standby aggregation node on the second service plane.

The aggregation node is a node located at an aggregation layer in the bearer network. In this embodiment of this application, the two aggregation nodes are also the active/standby nodes of each other on the two service planes. Protection switching is triggered when one of the aggregation nodes is faulty or a link connected to the aggregation node is faulty, and the other aggregation node is configured to perform transmission instead of the aggregation node. For example, when a link between the first aggregation node and the access node is faulty, the first traffic may be sent to the first aggregation node via the second aggregation node, and transmitted from the first service plane to the first core network device. Alternatively, when the first aggregation node device is faulty, the first traffic may still be sent to another node on the first service plane via the second aggregation node, and finally the first traffic is still sent to the first core network device. It may be understood that, in this application, a connection manner in which aggregation nodes exist in pairs and protect each other is retained. For the first service plane, the second aggregation node is a protection node of the first aggregation node. When the first aggregation node is faulty or a link connected to the first aggregation node is interrupted, node-level protection switching and link-level protection switching are triggered to switch the first traffic transmitted by the first aggregation node to the second aggregation node. Because the first service plane is not faulty, the first traffic is still returned to the first service plane, and a destination address is the first core network device.

In a possible implementation method, when nodes and links in the bearer network work normally, and when a traffic transmission direction is uplink: The first core node is configured to: receive the first traffic sent by the first aggregation node, and forward the first traffic to the first core network device. The second core node is configured to: receive the second traffic sent by the second aggregation node, and forward the second traffic to the second core network device.

When the traffic transmission direction is downlink: The first core node is configured to: receive the first traffic sent by the first core network device, and forward the first traffic to the first aggregation node. The second core node is configured to: receive the second traffic sent by the second core network device, and forward the second traffic to the second aggregation node.

In this embodiment of this application, the first core node and the second core node are no longer in an active/standby mode, but are respectively active core nodes on two service planes. Traffic is not split at the core node, but is directly sent to a corresponding core network device. This embodiment provides a method for implementing plane-level through changing only a connection manner without changing a node device in the bearer network during a fault.

FIG. 6 is used as an example. The core node is a traffic forwarding node between the aggregation node and the core network device. To be specific, the L3 node on the plane 1 forwards, to the MME 1, traffic sent by the L2/L3 node on the plane 1, and the L3 node on the plane 2 forwards, to the MME 2, traffic sent by the L2/L3 node on the plane 2. Forwarding of downlink traffic for transmission is similar. It may be understood that the active metro core node on the plane 1 and the active metro core node on the plane 2 in the bearer network shown in FIG. 7 also performs the same method. Details are not described herein.

In a possible implementation method, the first service plane further includes a third core node, and the second service plane further includes a fourth core node. The first core node is an active core node on the first service plane, and the third core node is a standby core node on the first service plane. The second core node is an active core node on the second service plane, and the fourth core node is a standby core node on the second service plane.

To improve reliability of data transmission at the core nodes, a protection node may be set for the active core node on the service plane. To be specific, the third core node is a protection node of the first core node, and the fourth core node is a protection node of the second core node. Specifically, the third core node is communicatively connected to the second aggregation node, and the fourth core node is communicatively connected to the first aggregation node. When transmission between the first aggregation node and the first core node is faulty, in an uplink direction of traffic transmission, the second aggregation node sends, to the third core node, the first traffic sent by the access node; and in a downlink direction of the traffic transmission, the second aggregation node sends the first traffic to the access node via the third core node. It may be understood that, when a node or a link on the first service plane is faulty, if a path from the access node to the first core network device can be re-established on the first service plane through automatic switching or rerouting, plane switching does not need to be performed. That is, the first traffic is still transmitted by a node on the first service plane to the first core network device.

In this embodiment of this application, on the basis of a service-level protection technology implemented through protection switching for a node-level fault and a link-level fault of a current bearer network, a plane-level protection technology from the access node to the core network is also used. The plane-level protection type is technically heterogeneous from the original service-level protection switching technology. Effective positions and application technologies of the plane-level protection and the service-level protection are completely different, and a probability that the plane-level protection technology and the service-level protection technology fail at the same time is very low. After the method provided in this embodiment of this application is used, in principle, except for poor-quality faults and common-cause faults, service availability no longer depends on device reliability. When a plane is completely interrupted, a service is not affected, and network reliability is greatly improved.

With reference to the accompanying drawings, FIG. 6 is used as an example. The standby L3 node on the plane 1 is a protection node of the active L3 node on the plane 1, and the standby L3 node on the plane 2 is a protection node of the active L3 node on the plane 2. The standby L3 node on the plane 1 is communicatively connected to the standby L2/L3 node, and the standby L3 node on the plane 2 is communicatively connected to the active L2/L3 node. When transmission between the active L2/L3 node and the active L3 node on the plane 1 is faulty, in the uplink direction of the traffic transmission, the standby L2/L3 node sends, to the standby L3 node on the plane 1, the first traffic sent by the access node; and in the downlink direction of the traffic transmission, the standby L2/L3 node sends the first traffic to the access node via the standby L3 node on the plane 1. It may be understood that, when a node or a link on the plane 1 is faulty, if a path from the access node to the MME 1 may be re-established on the plane 1 through automatic switching or rerouting, plane switching does not need to be performed. That is, the first traffic is still transmitted to the MME 1 via another node on the plane 1. Similarly, in the bearer network shown in FIG. 7, the standby metro core node on the plane 1 is a protection node of active metro core node on the plane 1, and the standby metro core node on the plane 2 is a protection node of the active metro core node on the plane 2. A path may be re-established on the plane through automatic switching or rerouting. Details are not described herein.

In a possible implementation method, the first core network device and the second core network device are specifically user plane function (UPF) or mobility management entity (MME) devices.

It may be understood that, when the communication system provided in this embodiment of this application is used in the LTE bearer network, the first core network device and the second core network device are MME devices; and when the communication system provided in this embodiment of this application is used in the 5G bearer network, the first core network device and the second core network device are UPF devices.

In a possible implementation method, when nodes and links in the bearer network work normally, and when a traffic transmission direction is uplink, the first core network device is configured to receive, through the first service plane, the first traffic sent by the access node; and the second core network device is configured to receive, through the second service plane, the second traffic sent by the access node.

When the traffic transmission direction is downlink, the first core network device is configured to send the first traffic to the access node through the first service plane; and the second core network device is configured to send the second traffic to the access node through the second service plane.

Further, when the first core network device is faulty or the first service plane is faulty, the control plane device in the core network automatically attempts to switch the service to the second core network device. In this case, the second core network device is configured to: receive, through the second service plane, the first traffic sent by the access node, and send the first traffic to the access node.

Specifically, the first core network device is communicatively connected to the first core node and the third core node on the first service plane, and the second core network device is communicatively connected to the second core node and the fourth core node on the second service plane. When transmission between the first core node and the first core network device is faulty, the third core node serves as the protection node of the first core node. In this case, the first core network device is configured to: receive, via the third core node, the first traffic sent by the access node, or send the first traffic to the access node via the third core node.

A third aspect of this application provides a communication method, including an access node, a first aggregation node, a second aggregation node, a first core node, a second core node, a first core network device, and a second core network device.

The method includes: The access node sends first traffic to the first core network device through a first service plane. The first service plane includes the first aggregation node and the first core node. The access node sends second traffic to the second core network device through the second service plane. The second service plane includes the second aggregation node and the second core node. The first service plane and the second service plane are independent all-active service planes in a bearer network.

It may be understood that, the communication method provided in this embodiment of this application is applied to the communication system provided in the second aspect, and connection relationships of the nodes and steps performed by the nodes in the communication method provided in this embodiment of this application are specifically described in the communication system provided in the second aspect. Details are not described herein again.

In a possible implementation method, when the first service plane is faulty, the access node switches the first traffic to the second service plane.

In a possible implementation method, the access node is connected to the first aggregation node through a first pseudo wire, and the access node is connected to the second aggregation node through a second pseudo wire.

In a possible implementation method, the access node determines, according to a first ACL rule, to forward a first packet through the first pseudo wire. A destination IP address of the first packet is an address of the first core network device. Further, the access node determines, according to a second ACL rule, to forward a second packet through the second pseudo wire. A destination IP address of the second packet is an address of the second core network device.

In a possible implementation, the method further includes: The access node obtains a first route to the first core network device. The first route includes a first routing prefix and a first next hop. An IP address of the first core network device matches a destination network segment of the first routing prefix, and the first next hop is the first aggregation node on the first service plane. The access node obtains a second route to the second core network device. The second route includes a second routing prefix and a second next hop. An IP address of the second core network device matches a destination network segment of the second routing prefix, and the second next hop is the second aggregation node on the second service plane.

In a possible implementation, the method further includes: The access node receives a first packet, and forwards the first packet to the first aggregation node based on the first route. A destination address of the first packet is the IP address of the first core network device. Further, the access node receives a second packet, and forwards the second packet to the second aggregation node based on the second route. A destination address of the second packet is the IP address of the second core network device.

In a possible implementation, the method further includes: The first aggregation node sends, to the first core node, the first traffic sent by the access node. The second aggregation node sends, to the second core node, the second traffic sent by the access node.

In a possible implementation method, the first aggregation node is an active aggregation node on the first service plane, and the second aggregation node is a standby aggregation node on the first service plane. The second aggregation node is an active aggregation node on the second service plane, and the first aggregation node is a standby aggregation node on the second service plane.

In a possible implementation, the method further includes: The first core node receives the first traffic sent by the first aggregation node, and forwards the first traffic to the first core network device. The second core node receives the second traffic sent by the second aggregation node, and forwards the second traffic to the second core network device.

In a possible implementation method, the first service plane further includes a third core node, and the second service plane further includes a fourth core node. The first core node is an active core node on the first service plane, and the third core node is a standby core node on the first service plane. The second core node is an active core node on the second service plane, and the fourth core node is a standby core node on the second service plane.

In a possible implementation method, the third core node is connected to the second aggregation node, and the fourth core node is connected to the first aggregation node.

In a possible implementation, the method further includes: The first core network device receives, through the first service plane, the first traffic sent by the access node. The second core network device receives, through the second service plane, the second traffic sent by the access node.

A fourth aspect of this application provides a route advertisement method. It may be understood that, in different bearer network networking, an access node implements splitting by using different configuration methods. FIG. 8 is a schematic diagram of route advertisement of an LTE bearer network according to an embodiment of this application. FIG. 9 is a schematic diagram of route advertisement of a 5G bearer network according to an embodiment of this application. Regardless of in L2VPN+L3 VPN networking or L3 VPN-to-edge networking, both an aggregation node and a core node implement splitting by configuring routing information.

The route advertisement method provided in this embodiment of this application is based on the communication system provided in this application. The communication system includes the access node, a first aggregation node, a second aggregation node, a first core node, a second core node, a third core node, a fourth core node, a first core network device, and a second core network device. The access node is connected to the first core network device via the first aggregation node and the first core node. The access node is connected to the second core network device via the second aggregation node and the second core node. The first core node is an active core node on a first service plane, and the third core node is a standby core node on the first service plane. The second core node is an active core node on a second service plane, and the fourth core node is a standby core node on the second service plane. The third core node is connected to the second aggregation node, and the fourth core node is connected to the first aggregation node.

The method includes: The first aggregation node obtains a first route to the first core network device. The first route includes a first routing prefix and a first next hop. An IP address of the first core network device matches a destination network segment of the first routing prefix, and the first next hop is the first core node on the first service plane. The first aggregation node obtains a second route to the first core network device. The second route includes the first routing prefix and a second next hop. The second next hop is the third core node on the first service plane, and a priority of the first route is higher than a priority of the second route. The first aggregation node obtains a third route to the second core network device. The third route includes a second routing prefix and a third next hop. An IP address of the second core network device matches a destination network segment of the second routing prefix, and the third next hop is the second core node on the second service plane. The first aggregation node obtains a fourth route to the second core network device. The fourth route includes the second routing prefix and a fourth next hop. The fourth next hop is the fourth core node on the second service plane, a priority of the fourth route is higher than a priority of the third route, and the priority of the second route is higher than the priority of the fourth route. The first service plane and the second service plane are independent all-active service planes in a bearer network.

It may be understood that a priority of a direct route is higher than a priority of an indirect route: The first aggregation node (an active L2/L3 node or an active backbone aggregation node) is directly connected to the first core node (an active L3 on a plane 1 or an active metro core on the plane 1), and the first aggregation node is indirectly connected to the third core node (a standby L3 on the plane 1 or a standby metro core on the plane 1). Therefore, the priority of the first route is higher than the priority of the second route. The first aggregation node is indirectly connected to the second core node (an active L3 on a plane 2 or an active metro core on the plane 2), and the first aggregation node is directly connected to the fourth core node (a standby L3 on the plane 2 or a metro core on the plane 2) on a protection path. Therefore, the priority of the fourth route is higher than the priority of the third route.

In addition, a priority of a same-plane route is higher than a priority of a cross-plane route: The first aggregation node, the first core node, and the third core node are all nodes on the first service plane, and the second core node and the fourth core node are nodes on the second service plane. Therefore, the priorities of the first route and the second route are higher than those of the third route and the fourth route.

The accompanying drawing is used as an example. Refer to a routing table of the active L2/L3 node in FIG. 8.

The 1^{st} entry and the 2^{nd} entry in the routing table are respectively corresponding to the first route and the second route in this embodiment of this application, and both are routes to the MME 1. A next hop of the 1^{st} entry is the active L3 on the plane 1, and a next hop of the 2^{nd} entry is the standby L3 on the plane 1. The active L3 is directly connected to the active L2/L3 node, and the standby L3 on the plane 1 is indirectly connected to the active L2/L3 node. To enable the active L2/L3 node to preferentially send data to the active L3 on the plane 1 based on the routing table, a priority of a route of another node that is the next hop in the routing table may be lowered. For example, a specific implementation method includes: defining a value of a priority of a route of a directly connected node on a plane as 10. Therefore, a value of a priority of a route of the 1^{st} entry in the routing table is 10. Because there is the standby L2/L3 between the active L2/L3 node and the standby L3 node on the plane 1, a value of a priority of a route of the 4^{th} entry in the routing table is 10 higher than the value of the 1^{st} entry: 20.

The 3^{rd} entry and the 4^{th} entry in the routing table are respectively corresponding to the third route and the fourth route in this embodiment of this application, and both are routes to the MME 2. It may be understood that the MME 2 is a core network device connected to the plane 2. To enable the active L2/L3 node to preferentially transmit data through plane 1 based on the routing table, a priority of a route of a node that is on another plane and that is the next hop in the routing table may be lowered. For example, a specific implementation method includes: defining a value of a priority of a cross-plane route to be increased by 10000. For example, in the routing table, the 3^{rd} entry and the 4^{th} entry are both routes to the MME 2, and cross-plane direct connection is used between the active L2/L3 node and the standby L3 node on the plane 2. Therefore, a value of a priority of a route of the 4^{th} entry in the routing table is 10000 (cross-plane)+10 (direct connection)=10010. Cross-plane indirect connection is used between the active L2/L3 node and the active L3 node on plane 2. A value of a priority of a route of the 3^{rd} entry in the routing table is 10020. It may be understood that the 5^{th} entry in the routing table represents a direct route between the active L2/L3 and the base station, a destination IP address is an IP 1 corresponding to the base station, and a priority of the direct route is the highest, and is specifically 1.

It may be understood that a priority rule of a routing table of the active backbone aggregation node in FIG. 9 is similar to the foregoing rule. Details are not described herein.

In the L3VPN-to-edge networking, a route advertisement method for the access node specifically includes: The access node obtains a fifth route to the first core network device. The fifth route includes the first routing prefix and a fifth next hop, and the fifth next hop is the first aggregation node. The access node obtains a sixth route to the first core network device. The sixth route includes the first routing prefix and a sixth next hop. The sixth next hop is the second aggregation node, and a priority of the fifth route is higher than a priority of the sixth route. The access node obtains a seventh route to the second core network device. The seventh route includes the second routing prefix and a seventh next hop. The seventh next hop is the first aggregation node. The access node obtains an eighth route to the second core network device. The eighth route includes the second routing prefix and an eighth next hop. The eighth next hop is the second aggregation node, and a priority of the eighth route is higher than a priority of the seventh route.

It may be understood that, in the L2VPN+L3VPN networking, the access node implements splitting by configuring ACLs, and there is no route advertisement process. Therefore, this embodiment of this application provides a route advertisement method in which the access node implements splitting by configuring routing information in the L3VPN-to-edge networking. Refer to FIG. 9. For example, the 5G bearer network is the L3VPN-to-edge networking. The first traffic whose destination IP address is the first core network device is sent to a core network on the plane 1 (a session established with the UPF 1), and the first traffic is sent to an upper active backbone aggregation node (the first aggregation node) through a link 1; and the second traffic whose destination IP address is the second core network device is sent to a core network on the plane 2 (a session established with the UPF 2), and the second traffic is sent to a lower standby backbone aggregation node (the second aggregation node) through a link 2, to achieve path separation. Therefore, the priority of the fifth route is higher than the priority of the sixth route, and the priority of the eighth route is higher than the priority of the seventh route.

When the access node cannot send the first traffic whose destination IP address is the first core network device to a node on the first service plane, the access node may attempt to send the first traffic to a node on the second service plane.

It may be understood that, in a normal case, the first traffic sent to the first core network device is transmitted via the node on the first service plane. However, when the node on the first plane does not respond, the first traffic needs to be switched to the node on the second service plane. In this case, this may be implemented by configuring priorities of routes. To be specific, a priority of a route of the node that is on the first service plane and to which the first traffic is sent is higher, and a priority of a route of the node that is on the second service plane and to which the first traffic is sent is lower. Similarly, a priority of a route of the node that is on the second service plane and to which the second traffic is sent is higher, and a priority of a route of the node that is on the first service plane and to which the second traffic is sent is lower.

For a specific implementation, refer to a routing table of the access node in FIG. 9. The 1^{st} entry and the 4^{th} entry in the routing table are a route to the UPF 1 and a route to the UPF 2 respectively, and have a same priority. A routing prefix of the 1^{st} entry matches an IP address IP 2 of the UFP 1, and a next hop is the active backbone aggregation node. A routing prefix of the 4^{th} entry matches an IP address IP 3 of the UFP 2, and a next hop is the backup backbone aggregation node. To enable the access node to forward a packet whose destination IP address is the IP 2 to the active backbone aggregation node based on the 1^{st} entry in the routing table, and forward a packet whose destination IP address is the IP 3 to the standby backbone aggregation node based on the 4^{th} entry in the routing table, a priority of a route of another node that is the next hop is in the routing table may be adjusted to a low priority. For example, a specific implementation method includes: defining a value of a priority of a cross-plane route to be increased by 10000. To be specific, when a value of a priority of the 1^{st} entry in the routing table is 10, a value of a priority of the 2^{nd} entry in the routing table is 10010. It may be understood that a higher value of the priority of the route indicates a lower priority. Similarly, a value of a priority of the 3^{rd} entry in the routing table is 10010, and a value of a priority of the 4^{th} entry in the routing table is 10. The 1^{st} entry, the 2^{nd} entry, the 3^{rd} entry, and the 4^{th} entry in the routing table are respectively corresponding to the fourth route, the fifth route, the sixth route, and the seventh route in the foregoing embodiment of this application. It may be understood that the 5^{th} entry in the routing table represents a direct route between the access node and the base station, a destination IP address is an IP 1 corresponding to the base station, and a priority of the direct route is the highest, and is specifically 1.

In a possible implementation method, a route advertisement method of the second aggregation node specifically includes: The second aggregation node obtains a ninth route to the first core network device. The ninth route includes the first routing prefix and a ninth next hop. The ninth next hop is the first core node. The second aggregation node obtains a tenth route to the first core network device. The tenth route includes the first routing prefix and a tenth next hop. The tenth next hop is the third core node, and a priority of the tenth route is higher than a priority of the ninth route. The second aggregation node obtains an eleventh route to the second core network device. The eleventh route includes the second routing prefix and an eleventh next hop. The eleventh next hop is the second core node. The second aggregation node obtains a twelfth route to the second core network device. The twelfth route includes the second routing prefix and a twelfth next hop. The twelfth next hop is the fourth core node, a priority of the eleventh route is higher than a priority of the twelfth route, and the priority of the twelfth route is higher than the priority of the tenth route.

It may be understood that, the route advertisement method of the second aggregation node is similar to that of the first aggregation node, and a principle in which a priority of a direct route is higher than a priority of an indirect route is followed: The priority of the tenth route is higher than the priority of the ninth route, and the priority of the eleventh route is higher than the priority of the twelfth route. A principle in which a priority of a same-plane route is higher than a priority of a cross-plane route: Both the priorities of the eleventh route and the twelfth route are higher than the priorities of the ninth route and the tenth route.

The accompanying drawing is used as an example. Refer to a routing table of the standby L2/L3 node in FIG. 8. It may be understood that, because the active L2/L3 node and the standby L2/L3 node are aggregation nodes on the plane 1 and the plane 2 respectively, priority rules of the routing tables of the active L2/L3 node and the standby L2/L3 node are similar. The 1^{st} entry, the 2^{nd} entry, the 3^{rd} entry, and the 4^{th} entry in the routing table are respectively corresponding to the ninth route, the tenth route, the eleventh route, and the twelfth route in this embodiment of this application.

To enable the standby L2/L3 node to preferentially send data to the active L3 on the plane 2 based on the routing table, a priority of a route of another node that is the next hop in the routing table may be lowered. For example, a specific implementation method includes: defining a value of a priority of a route of a directly connected node on a plane as 10. Therefore, a value of a priority of a route of the 3^{rd} entry in the routing table is 10. Because there is the active L2/L3 between the standby L2/L3 node and the standby L3 node on the plane 2, a value of a priority of a route of the 4^{th} entry in the routing table is 10 higher than the value of the 3^{rd} entry: 20.

To enable the standby L2/L3 node to preferentially transmit data through the plane 2 based on the routing table, a priority of a route of another node that is the next hop in the routing table may be lowered. For example, a specific implementation method includes: defining a value of a priority of a cross-plane route to be increased by 10000. For example, in the routing table, both the 1^{st} entry and the 2^{nd} entry are routes to the MME 1, and cross-plane direct connection is used between the standby L2/L3 node and the standby L3 on the plane 1. Therefore, the value of the priority of the route of the 3^{rd} entry in the routing table is 10000 (cross-plane)+10 (direct connection)=10010. Cross-plane indirect connection is used between the standby L2/L3 node and the active L3 node on the plane 1. A value of a priority of a route of the 1^{st} entry in the routing table is 10020. It may be understood that the 5^{th} entry in the routing table represents a direct route between the standby L2/L3 and the base station, a destination IP address is an IP 1 corresponding to the base station, and a priority of the direct route is the highest, and is specifically 1.

It may be understood that a priority rule of a routing table of the standby backbone aggregation node in FIG. 9 is similar to the foregoing rule. Details are not described herein.

In a possible implementation method, a route advertisement method of the first core node specifically includes: The first core node obtains a thirteenth route to the base station. The thirteenth route includes a third routing prefix and a thirteenth next hop. An IP address of the base station matches a destination network segment of the third routing prefix, and the thirteenth next hop is the first aggregation node. The first core node obtains a fourteenth route to the base station. The fourteenth route includes the third routing prefix and a fourteenth next hop. The fourteenth next hop is the second aggregation node, and a priority of the thirteenth route is higher than a priority of the fourteenth route.

It may be understood that, in a downlink direction of data transmission, the destination network segment of the routing prefix of the first core node matches the IP address of the base station, and the first core node needs to pass through the first aggregation node and the second aggregation node to reach the base station. Because both the first core node and the first aggregation node belong to the first service plane, and the second aggregation node belongs to the second service plane, the priority of the thirteenth route is higher than that of the fourteenth route.

Further, in an uplink direction of the data transmission, the destination network segment of the routing prefix of the first core node matches the IP address of the first core network device, and the first core node may directly configure a static route pointing to the first core network device. The third core node serves as the standby node of the first core node. Therefore, a priority of a route from the first core node to the first core network device is higher than a priority of a route from the first core node to the third core node.

The accompanying drawing is used as an example. Refer to a routing table of the active L3 on the plane 1 in FIG. 8.

The 3^{rd} entry and the 4^{th} entry in the routing table are respectively corresponding to the thirteenth route and the fourteenth route in this embodiment of this application, and both are routes to the base station. A next hop of the 3^{rd} entry is the active L2/L3, and a next hop of the 4^{th} entry is the standby L2/L3. The 1^{st} entry and the 2^{nd} entry in the routing table are both routes to the MM 1. A next hop of the 1^{st} entry is the MM 1, and a next hop of the 2^{nd} entry is the standby L3 on the plane 1.

The standby L3 on the plane 1 and the active L3 on the plane 1 are directly connected nodes on the plane, the active L2/L3 on the plane 1 and the active L3 on the plane 1 are directly connected nodes on the plane, and the standby L2/L3 and the active L3 on the plane 1 are indirectly connected nodes across planes. To enable the active L3 on the plane 1 to preferentially send data to a directly connected node on the plane, then to an indirectly connected node on the plane, and finally to a cross-plane node based on the routing table, a priority of a route may be defined. For example, a specific implementation method includes: defining a value of the priority of the route of the directly connected node on the plane as 10, and defining a value of a priority of a cross-plane route to be increased by 10000. Therefore, values of priorities of routes of the 2^{nd} entry and the 3^{rd} entry in the routing table are 10, and a value of a priority of a route of the 4^{th} entry in the routing table is 10020. It may be understood that the 1^{st} entry in the routing table indicates a static route from the active L3 on the plane 1 to the MME 1, and a destination IP address is an IP 2 corresponding to the MME 1. A priority of the static route is the same as that of the direct route, and both have a highest priority with a specific value 1.

It may be understood that, a priority rule of a routing table of the active metro core node on the plane 1 in FIG. 9 is similar to the foregoing rule. Details are not described herein.

In a possible implementation method, a route advertisement method of the second core node specifically includes: The second core node obtains a fifteenth route to the base station. The fifteenth route includes the third routing prefix and a fifteenth next hop. The fifteenth next hop is the first aggregation node. The second core node obtains a sixteenth route to the base station. The fourteenth route includes the third routing prefix and a sixteenth next hop. The sixteenth next hop is the second aggregation node, and a priority of the sixteenth route is higher than a priority of the fifteenth route.

It may be understood that, similar to the foregoing route advertisement method of the first core node, in the downlink direction of the data transmission, the destination network segment of the routing prefix of the second core node matches the IP address of the base station, and the second core node needs to pass through the first aggregation node and the second aggregation node to reach the base station. The second core node and the second aggregation node belong to the second service plane, and the first aggregation node belongs to the first service plane. Therefore, the priority of the sixteenth route is higher than the priority of the fifteenth route.

Further, in the uplink direction of the data transmission, the destination network segment of the routing prefix of the second core node matches the IP address of the second core network device, and the second core node may directly configure a static route pointing to the second core network device. The fourth core node serves as the standby node of the second core node. Therefore, a priority of a route from the second core node to the second core network device is higher than a priority of a route from the second core node to the fourth core node.

The accompanying drawing is used as an example. Refer to a routing table of the active L3 node on the plane 2 in FIG. 8. It may be understood that, because the active L3 node on the plane 1 and the active L3 node on the plane 2 are the active core nodes on the plane 1 and plane 2 respectively, priority rules of routing tables of the two nodes are similar. The 3^{rd} entry and the 4^{th} entry in the routing table are respectively corresponding to the fifteenth route and the tenth route in this embodiment of this application.

To enable the active L3 on the plane 2 to preferentially send data to a directly connected node on the plane, then to an indirectly connected node on the plane, and finally to a cross-plane node based on the routing table, priorities of routes may be defined. For example, a specific implementation method includes: defining a value of the priority of the route of the directly connected node on the plane as 10, and defining a value of a priority of a cross-plane route to be increased by 10000. Therefore, values of the priorities of the routes of the 2^{nd} entry and the 4^{th} entry in the routing table are 10, and a value of the priority of the route of the 3^{rd} entry in the routing table is 10020. It may be understood that the 1^{st} entry in the routing table indicates a static route from the active L3 on the plane 2 to the MME 2, and a destination IP address is an IP 3 corresponding to the MME 2. A priority of the static route is the same as that of the direct route, and both have a highest priority with a specific value 1.

It may be understood that, a priority rule of a routing table of the active metro core node on the plane 2 in FIG. 9 is similar to the foregoing rule. Details are not described herein.

A specific implementation method for route advertisement is as follows.

Refer to FIG. 8. In an LTE bearer network of L2VPN+L3VPN networking, static route deployment includes the following steps.
(1) A static route pointing to the MME 1 is configured on each of the two L3 devices on the plane 1, and a priority of the static route is set to 1. Similarly, a static route pointing to the MME 2 with a priority of 1 is configured on the plane 2.
(2) A direct route pointing to the base station is automatically generated on the active/standby L2/L3 device, and a priority of the route is also 1.

The route flooding includes:
A network management system performs automatic or manual route flooding based on a direct (PEER) relationship between devices and according to the following principles.
a. The priorities of the direct route and the configured static routes are both 1.
b. A priority of a route flooded to a directly connected peer on the plane (where a device on an original route and a target device of the flooding have a same plane attribute) is adjusted to 10, and a priority of a route flooded between indirectly connected peers is adjusted to 20.
c. If the peer relationship is also configured across planes (where a device on an original route and a target device of the flooding have different plane attributes), a priority of a flooded route is increased by 10000 on the basis of the principle b.

If dynamic route flooding is used, cross-plane forwarding may be avoided as much as possible by increasing a COST value of a cross-domain link or reducing a priority (Local Pref) of a local route.

Another specific implementation method for route advertisement is as follows.

Refer to FIG. 9. In a 5G bearer network of L3 VPN-to-edge networking, static route deployment includes the following steps.
(1) An L3 VPN core domain is divided into two working planes. The two working planes are independent of each other as much as possible. In a normal case, service-level protection and node-level protection are implemented on the plane (where a cross-domain emergency tunnel may be retained, but a corresponding route has a low priority).
(2) The core network resource pool is divided into two groups that are connected to the metro core devices on the two planes.
(3) To ensure L3 service connectivity, details, network segments, or default routes of the base station and the core network need to be advertised to a remote end through static configuration, dynamic learning, or flooding of the network management system or in another manner.

The route flooding process in this method is similar to the route flooding process of the LTE bearer network, and complies with the following principles: A route advertised on a same plane has a high priority, and a route advertised across planes has a low priority.

It should be added that, when the access node accesses the traffic from the base station, the traffic may be split and forwarded based on the IP address, and splits the traffic through routes without needing to perform splitting by using the ACL function. Apart of the traffic is sent to the core network on the plane 1 (session established with the UPF 1), and is sent to the upper backbone aggregation node via the link 1. The other part of the traffic is sent to the core network on the plane 2 (session established with the UPF 2), and is sent to the lower backbone aggregation node via the link 2, to achieve path separation.

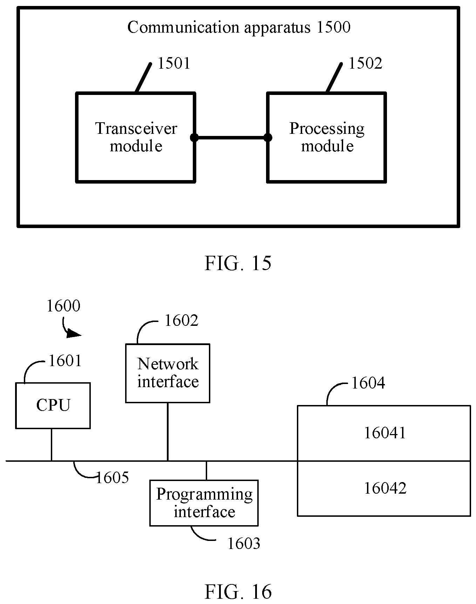

To implement the foregoing embodiment, a fifth aspect of this application provides a communication apparatus. FIG. 15 is a schematic diagram of a structure of a communication apparatus 1500 according to an embodiment of this application. The communication apparatus 1500 may be specifically an access node in a bearer network. The access node is a node located at an access stratum of the bearer network. The access node is communicatively connected to a base station, receives a data flow sent by the base station, and transmits the data flow to a core network device via nodes at an aggregation layer and a core layer of the bearer network. In addition, the access node is further configured to: receive a data flow of the core network device via the nodes at the core layer and the aggregation layer of the bearer network, and send the data flow to the base station. The communication apparatus includes: a transceiver module 1501, configured to perform sending and receiving operations of the access node according to the first aspect; and a processing module 1502, configured to perform a processing operation of the access node according to the first aspect.

The transceiver module 1501 may implement a corresponding communication function, and the transceiver module 1501 may also be referred to as a communication interface or a communication unit. The processing module 1502 is configured to perform the processing operation.

Optionally, the communication apparatus 1500 may further include a storage module. The storage module may be configured to store instructions and/or data. The processing module 1502 may read the instructions and/or data in the storage module, to enable the communication apparatus to implement the method embodiment shown in FIG. 15.

The communication apparatus 1500 may be configured to perform an action performed by the access node in the foregoing method embodiment. The communication apparatus 1500 may be the access node or a part that may be configured on the access node. The transceiver module 1501 is configured to perform a receiving-related operation of the access node in the foregoing method embodiment, and the processing module 1502 is configured to perform a processing-related operation of the access node in the foregoing method embodiment.

In a specific implementation, the transceiver module 1501 may include a sending module and a receiving module. The sending module is configured to perform a sending operation of the access node in the method embodiment shown in FIG. 5. The receiving module is configured to perform a receiving operation of the access node in the method embodiment shown in FIG. 5.

For example, the communication apparatus 1500 is configured to perform the following solution.

The transceiver module 1501 is configured to send first traffic to a first core network device in a core network through a first service plane of a bearer network.

The transceiver module 1501 is configured to send second traffic to a second core network device in the core network through a second service plane of the bearer network.

The first service plane and the second service plane are independent all-active service planes in the bearer network.

In a possible implementation, when the first service plane is faulty, the transceiver module 1501 is configured to switch the first traffic from the first service plane to the second service plane.

In a possible implementation, the access node is connected to the first service plane through a first pseudo wire, and the access node is connected to the second service plane through a second pseudo wire. The processing module 1502 is specifically configured to determine, according to a first access control list ACL rule, to forward a first packet through the first pseudo wire. A destination IP address of the first packet is an address of the first core network device.

In a possible implementation, the processing module 1502 is specifically configured to determine, according to a second ACL rule, to forward a second packet through the second pseudo wire. A destination IP address of the second packet is an address of the second core network device.

In a possible implementation, the transceiver module 1501 is further configured to obtain a first route to the first core network device. The first route includes a first routing prefix and a first next hop. An IP address of the first core network device matches a destination network segment of the first routing prefix, and the first next hop is a first aggregation node on the first service plane. The transceiver module 1501 is further configured to obtain a second route to the second core network device. The second route includes a second routing prefix and a second next hop. An IP address of the second core network device matches a destination network segment of the second routing prefix, and the second next hop is a second aggregation node on the second service plane.

In a possible implementation, the transceiver module 1501 is further configured to: receive the first packet, and forward the first packet to the first aggregation node based on the first route. A destination address of the first packet is the IP address of the first core network device.

In a possible implementation, transceiver module 1501 is further configured to: receive the second packet, and forward the second packet to the second aggregation node based on the second route. A destination address of the second packet is the IP address of the second core network device.

A sixth aspect of this application provides a communication apparatus. The communication apparatus is an aggregation node on a first service plane, and includes:
a transceiver module, configured to forward, to a first core node, a first packet sent by an access node, where a destination IP address of the first packet is a first core network device, and the first core node belongs to the first service plane, where
the transceiver module is further configured to forward, to a second core node via an aggregation node on a second service plane, a second packet sent by the access node, where a destination IP address of the second packet is a second core network device, and the second core node belongs to the second service plane; and
the first service plane and the second service plane are independent all-active service planes in a bearer network.

It may be understood that, the communication apparatus in this embodiment of this application is used as the aggregation node on the first service plane: a first aggregation node. In this embodiment of this application, the first aggregation node is an active aggregation node on the first service plane, and is also a standby aggregation node on the second service plane. When the aggregation node on the second service plane is faulty or a link connected to the aggregation node is faulty, protection switching is triggered. The first aggregation node in this embodiment of this application is configured to perform transmission instead of the aggregation node. For example, the access node sends the second traffic whose destination address is second core network device to a second aggregation node on the second plane. When a link between the second aggregation node and the access node is faulty, the second traffic may be sent to the second aggregation node via the first aggregation node, and transmitted from the second service plane to the second core network device. Alternatively, when the second aggregation node device is faulty, the second traffic may still be sent to another node on the second service plane via the first aggregation node, and finally the second traffic is sent to the second core network device. It may be understood that, for the second service plane, the first aggregation node is a protection node of the second aggregation node. When the second aggregation node is faulty or a link connected to the second aggregation node is interrupted, node-level protection switching and link-level protection switching are triggered to switch the second traffic transmitted by the second aggregation node to the first aggregation node. Because the second service plane is not faulty, the second traffic is still returned to the second service plane, and a destination address is the second core network device.

A seventh aspect of this application provides a communication apparatus, including:
a transceiver module, configured to perform sending and receiving operations of the first aggregation node according to the fourth aspect.

The transceiver module may implement a corresponding communication function, and the transceiver module may also be referred to as a communication interface or a communication unit. The communication apparatus may be configured to perform an action performed by the first aggregation node in the foregoing method embodiment. The communication apparatus may be the first aggregation node or a part that may be configured on the first aggregation node. The transceiver module is configured to perform a receiving-related operation of an access node in the foregoing method embodiment.

For example, the communication apparatus is configured to perform the following solution:
The transceiver module is specifically configured to obtain a first route to a first core network device. The first route includes a first routing prefix and a first next hop. An IP address of the first core network device matches a destination network segment of the first routing prefix, and the first next hop is a first core node on a first service plane.

The transceiver module is further specifically configured to obtain a second route to the first core network device. The second route includes the first routing prefix and a second next hop. The second next hop is a third core node on the first service plane, and a priority of the first route is higher than a priority of the second route.

The transceiver module is further specifically configured to obtain a third route to a second core network device. The third route includes a second routing prefix and a third next hop. An IP address of the second core network device matches a destination network segment of the second routing prefix, and the third next hop is a second core node on a second service plane.

The transceiver module is further specifically configured to obtain a fourth route to the second core network device. The fourth route includes the second routing prefix and a fourth next hop. The fourth next hop is a fourth core node on the second service plane, a priority of the fourth route is higher than a priority of the third route, and the priority of the second route is higher than the priority of the fourth route.

The first service plane and the second service plane are independent all-active service planes in a bearer network. The first service plane includes the first aggregation node, the first core node, and the third core node. The second service plane includes a second aggregation node, the second core node, and the fourth core node. The first core node is an active core node on the first service plane, and the third core node is a standby core node on the first service plane. The second core node is an active core node on the second service plane, and the fourth core node is a standby core node on the second service plane.

It may be understood that, refer to a routing table of an active L2/L3 node in FIG. 8. The 1^{st} entry and the 2^{nd} entry in the routing table are respectively corresponding to the first route and the second route in this embodiment of this application. The 3^{rd} entry and the 4^{th} entry in the routing table are respectively corresponding to the third route and the fourth route in this embodiment of this application.

To enable the active L2/L3 node to preferentially send data to an active L3 on a plane 1 based on the routing table, a priority of a route of another node that is the next hop in the routing table may be lowered. A specific implementation method includes: defining a value of a priority of a route of a directly connected node on the plane as 10. Therefore, a value of the priority of the route of the 1^{st} entry in the routing table is 10. Because there is a standby L2/L3 between the active L2/L3 node and a standby L3 node on a plane 1, a value of the priority of the route of the 4^{th} entry in the routing table is 10 higher than the value of the 1^{st} entry: 20. To enable the active L2/L3 node to preferentially transmit data through the plane 1 based on the routing table, a priority of a route of another node that is on another plane and that is the next hop in the routing table may be lowered. A specific implementation method includes: defining a value of a priority of a cross-plane route to be increased by 10000. For example, in the routing table, the 3^{rd} entry and the 4^{th} entry are both routes to an MME 2, and cross-plane direct connection is used between the active L2/L3 node and the standby L3 node on the plane 2. Therefore, a value of a priority of a route of the 4^{th} entry in the routing table is 10000 (cross-plane)+10 (direct connection)=10010. Cross-plane indirect connection is used between the active L2/L3 node and the active L3 node on the plane 2. A value of a priority of a route of the 3^{rd} entry in the routing table is 10020.

Based on the foregoing data transmission method, communication system, route advertisement method, and communication apparatus, this application separately provides service recovery methods for different fault types in a 5G bearer network and an LTE bearer network. Details are as follows.

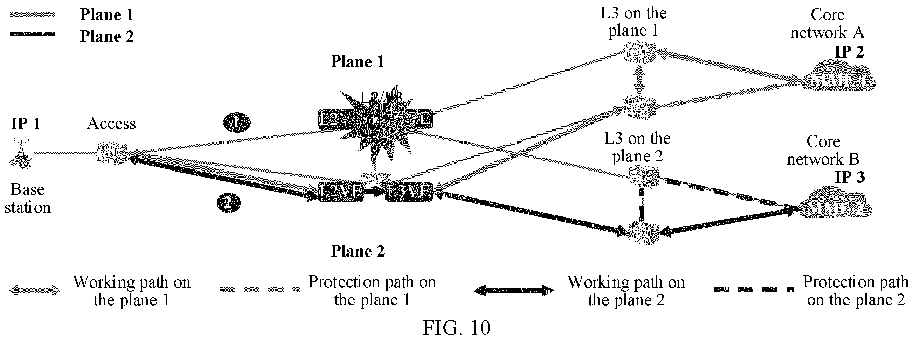

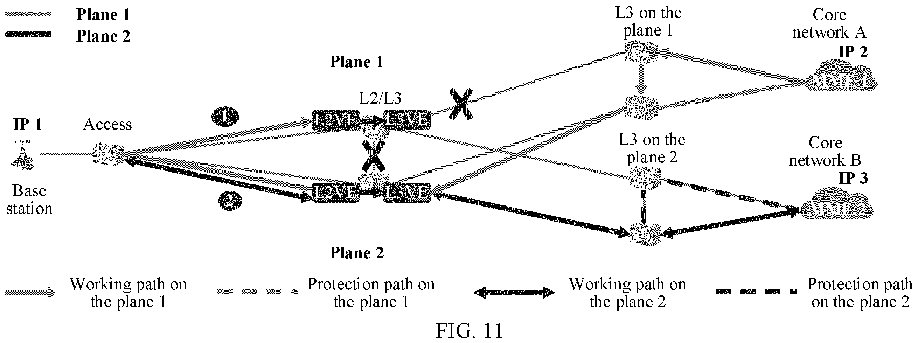

FIG. 10 and FIG. 11 are schematic diagrams of service recovery for different fault types in the LTE bearer network.

For a fault 1, refer to FIG. 10.

When a link of the active L2/L3 node is faulty or the device is unavailable, a service is recovered through CPS or fast reroute (Fast Reroute, FRR) protection switching. In the bearer network, service protection can be implemented through node-level protection switching, which does not need to be upgraded to plane-level protection switching.

For a fault 2, refer to FIG. 11.

When an uplink and a horizontal link of the active L2/L3 node are faulty, a service is recovered through plane switchover. The L2/L3 is isolated after uplink service traffic passes through the PW 1 to reach the L2/L3. A service cannot be recovered through service-level protection and node-level protection, which needs to be upgraded to plane-level protection.

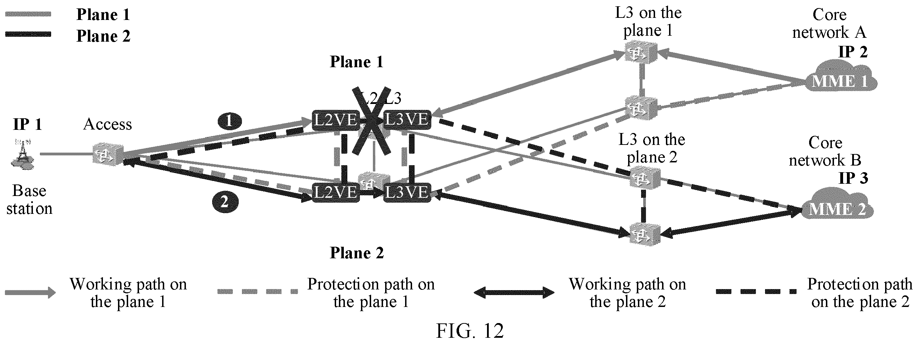

For a fault 3, refer to FIG. 12.

If the active L2/L3 node encounters a silent fault or protection switching fails, a service is recovered through plane switchover. A recovery process for the fault 3 is as follows.
(1) VPN forwarding inside the active L2/L3 device is faulty, but no tunnel OAM alarm is reported. The silent fault occurs, and the service does not trigger switching.
(2) Plane 1: Both uplink service traffic and downlink service traffic pass through the active L2/L3 device. CPS and FRR protection switching are not performed due to the silent fault (where service-level and node-level protection functions fail), and the service is continuously damaged.
(3) Plane 2: Both uplink service traffic and downlink service traffic pass through only the standby L2/L3 device and are not affected by this fault. The service is forwarded normally.
(4) In this case, the control plane device in the core network finds that a user session of a device in the core network A is interrupted, and attempts to re-create the session via the core network B. The new session can be successfully created only through the plane 2, and the service is recovered.
(5) After all sessions on the core network A are switched to the core network B, all traffic is carried only on a working path of the plane 2. Plane-level service switching is implemented to ensure service availability.

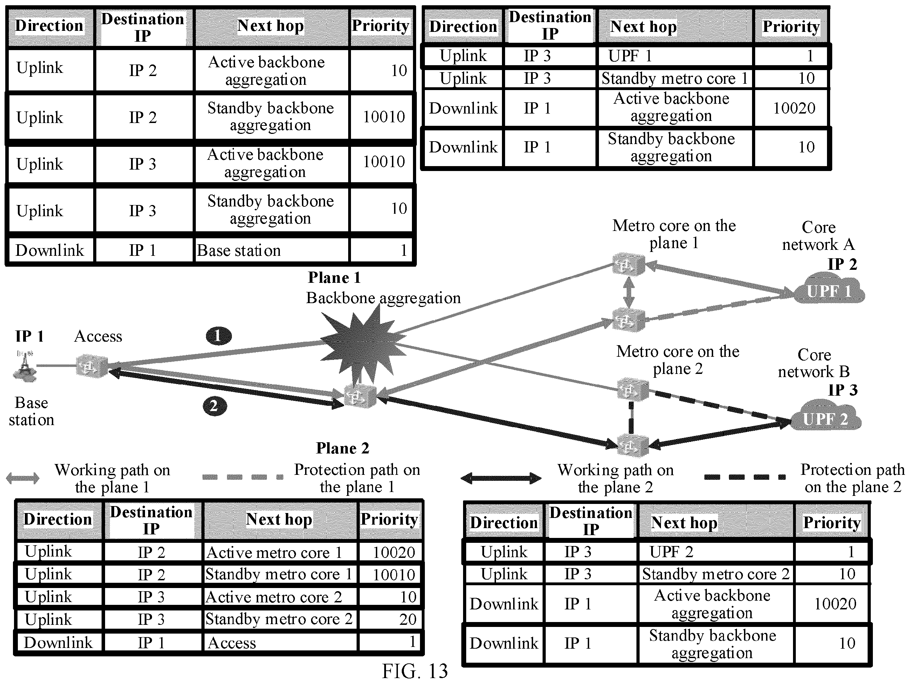

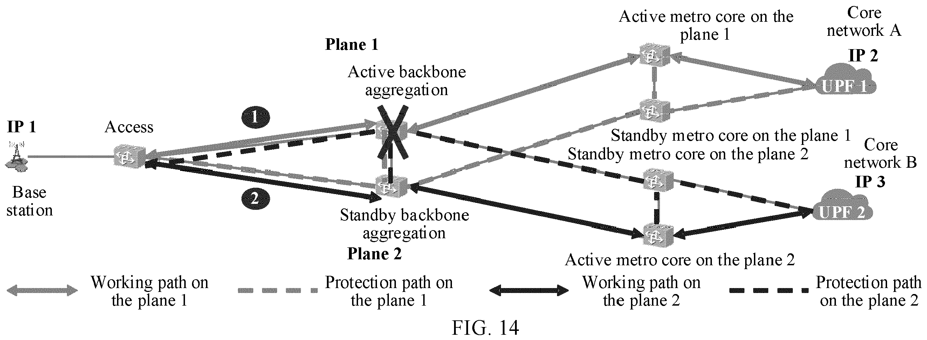

FIG. 13 and FIG. 14 are schematic diagrams of service recovery for different fault types in the 5G bearer network.

For a fault 1, refer to FIG. 13.

When a link of the active backbone aggregation node is faulty or the device is unavailable, a service is recovered through FRR protection switching. In the bearer network, service protection can be implemented through node-level protection switching, which does not need to be upgraded to plane-level protection switching. Information about a route after the node switching is shown in the figure (where an active route is shown by a solid box).

For a fault 2, refer to FIG. 14.

When the active backbone aggregation node encounters a silent fault or the protection switching fails, a service is recovered through plane switchover.

It may be understood that, in this application, the uplink and downlink service traffic of the LTE and 5G bearer networks is split to two or more independent physical networks by using an ACL redirection technology, a CPS protection technology, and a routing plane advertisement policy, and an automatic redundancy function of the core network pool is combined. This greatly improves network reliability.

To implement the foregoing embodiments, this application further provides a communication apparatus. FIG. 16 is a schematic diagram of a structure of a communication apparatus 1600 according to an embodiment of this application.

Although the communication apparatus 1600 shown in FIG. 16 shows some specific features, a person skilled in the art may be aware, from embodiments of this application, that, for brevity, FIG. 16 does not show various other features, to avoid confusing more related aspects of implementations disclosed in embodiments of this application. For this purpose, as an example, in some implementations, the communication apparatus 1600 includes one or more processing units (for example, a CPU) 1601, a network interface 1602, a programming interface 1603, a memory 1604, and one or more communication buses 1605 that are configured to interconnect various components. In some other implementations, some functional parts or units may alternatively be omitted or added to the communication apparatus 1600 based on the foregoing example.

In some implementations, the network interface 1602 is configured to connect to one or more other communication apparatuses/servers in a network system. In some implementations, the communication bus 1605 includes a circuit that performs interconnection and controls communication between system components. The memory 1604 may include a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 1604 may alternatively include a volatile memory. The volatile memory may be a random access memory (random access memory, RAM), and is used as an external cache.

In some implementations, a non-transitory computer-readable storage medium of the memory 1604 or the memory 1604 stores the following programs, modules, and data structures, or a subset thereof, and for example, includes a transceiver unit (not shown in the figure), an obtaining unit 16041, and a processing unit 16042.

In a possible embodiment, the communication apparatus 1600 may have any function of the access node, the aggregation node, the core node, or the core network device in the method embodiment corresponding to any one of the foregoing aspects.

It should be understood that the communication apparatus 1600 is corresponding to the access node, the aggregation node, the core node, or the core network device in the foregoing method embodiment. The modules in the communication apparatus 1600 and the foregoing other operations and/or functions are respectively intended to implement various steps and methods implemented by the access node, the aggregation node, the core node, or the core network device in the foregoing method embodiment. For specific details, refer to the foregoing method embodiment. For brevity, details are not described herein again.

It should be understood that, in this application, the network interface 1602 on the communication apparatus 1600 may perform data receiving and sending operations, or the processor may invoke program code in the memory, and implement functions of the transceiver unit in cooperation with the network interface 1602 when required.

In various implementations, the communication apparatus 1600 is configured to perform the data transmission method provided in embodiments of this application, for example, perform the data transmission method corresponding to the embodiment shown in FIG. 5.

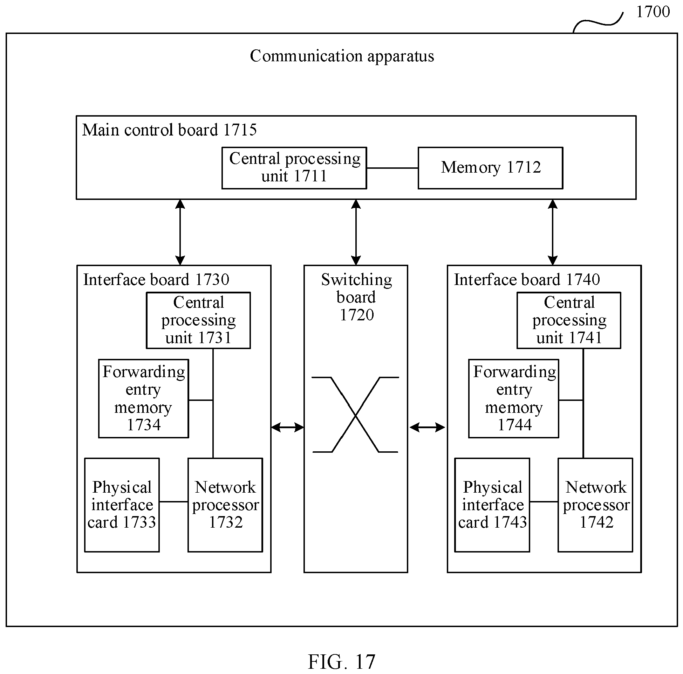

A specific structure of the communication apparatus shown in FIG. 16 in this application may be shown in FIG. 17.

FIG. 17 is a schematic diagram of a structure of a communication apparatus 1700 according to an embodiment of this application. The communication apparatus 1700 includes a main control board 1715 and an interface board 1730.

The main control board 1715 is also referred to as a main processing unit (main processing unit, MPU) or a route processor (route processor). The main control board 1715 is configured to control and manage components in the communication apparatus 1700, including route computation, device management, device maintenance, and protocol processing functions. The main control board 1715 includes a central processing unit 1711 and a memory 1712.

The interface board 1730 is also referred to as a line processing unit (line processing unit, LPU), a line card (line card), or a service board. The interface board 1730 is configured to: provide various service interfaces, and forward a data packet. The service interfaces include, but are not limited to, an Ethernet interface, a POS (Packet over SONET/SDH) interface, and the like. The interface board 1730 includes a central processing unit 1731, a network processor 1732, a forwarding entry memory 1734, and a physical interface card (physical interface card, PIC) 1733.

The central processing unit 1731 on the interface board 1730 is configured to: control and manage the interface board 1730, and communicate with the central processing unit 1711 on the main control board 1715.

The network processor 1732 is configured to implement packet forwarding processing. A form of the network processor 1732 may be a forwarding chip.

The physical interface card 1733 is configured to implement an interconnection function at a physical layer. Original traffic enters the interface board 1730 from the physical interface card 1733, and a processed packet is sent from the physical interface card 1733. The physical interface card 1733 includes at least one physical interface. The physical interface is also referred to as a physical port, and the physical interface may be a flexible Ethernet (Flexible Ethernet, FlexE) physical interface. The physical interface card 1733 is also referred to as a subcard, may be mounted on the interface board 1730, and is responsible for converting an optical/electrical signal into a packet, performing validity check on the packet, and forwarding the packet to the network processor 1732 for processing. In some embodiments, the central processing unit 1731 of the interface board 1730 may also perform a function of the network processor 1732, for example, implement software forwarding based on a general-purpose CPU. In this way, the interface board 1730 does not need the network processor 1732.

Optionally, the communication apparatus 1700 includes a plurality of interface boards. For example, the communication apparatus 1700 further includes an interface board 1740. The interface board 1740 includes a central processing unit 1741, a network processor 1742, a forwarding entry memory 1744, and a physical interface card 1743.

Optionally, the communication apparatus 1700 further includes a switching board 1720. The switching board 1720 may also be referred to as a switch fabric unit (switch fabric unit, SFU). When the communication apparatus includes a plurality of interface boards 1730, the switching board 1720 is configured to exchange data between the interface boards. For example, the interface board 1730 and the interface board 1740 may communicate with each other through the switching board 1720.

The main control board 1715 is coupled to the interface board. For example, the main control board 1715, the interface board 1730, the interface board 1740, and the switching board 1720 are connected through a system bus and/or a system backplane to communicate with each other. In a possible implementation, an inter-process communication (inter-process communication, IPC) tunnel is established between the main control board 1715 and the interface board 1730, and communication is performed between the main control board 1715 and the interface board 1730 through the IPC tunnel.

Logically, the communication apparatus 1700 includes a control plane and a forwarding plane. The control plane includes the main control board 1715 and the central processing unit 1731. The forwarding plane includes components for performing forwarding, for example, the forwarding entry memory 1734, the physical interface card 1733, and the network processor 1732. The control plane implements functions such as advertising a route, generating a forwarding table, processing signaling and a protocol packet, and configuring and maintaining a status of a device. The control plane delivers the generated forwarding table to the forwarding plane. On the forwarding plane, the network processor 1732 forwards, based on the forwarding table delivered by the control plane, a packet received by the physical interface card 1733. The forwarding table delivered by the control plane may be stored in the forwarding entry memory 1734. In some embodiments, the control plane and the forwarding plane may be completely separated, and are not on a same device.

It should be understood that the transceiver unit in the communication apparatus 1600 may be equivalent to the physical interface card 1733 or the physical interface card 1743 in the communication apparatus 1700. The obtaining unit 16041 and the processing unit 16042 in the communication apparatus 1600 may be equivalent to the central processing unit 1711 or the central processing unit 1731 in the communication apparatus 1700, or may be equivalent to program code or instructions stored in the memory 1712.

It should be understood that, in this embodiment of this application, operations on the interface board 1740 are the same as operations on the interface board 1730. For brevity, details are not described again. It should be understood that the communication apparatus 1700 in this embodiment may be corresponding to the access node, the aggregation node, the core node, or the core network device in the foregoing method embodiments. The main control board 1715, the interface board 1730, and/or the interface board 1740 in the communication apparatus 1700 may implement functions and/or various steps implemented by the access node, the aggregation node, the core node, or the core network device in the foregoing method embodiments. For brevity, details are not described herein again.

It should be noted that, there may be one or more main control boards. When there are a plurality of main control boards, the main control boards may include an active main control board and a standby main control board. There may be one or more interface boards, and the communication apparatus with a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the communication apparatus may not need a switching board, and the interface board provides a function of processing service data of an entire system. In a distributed forwarding architecture, the communication apparatus may include at least one switching board, and exchange data between a plurality of interface boards through the switching board, to provide a large-capacity data exchange and processing capability. Optionally, the form of the communication apparatus may alternatively be only one board, to be specific, there is no switching board, and functions of the interface board and the main control board are integrated on the board. In this case, a central processing unit on the interface board and a central processing unit on the main control board may be combined into one central processing unit on the board, to implement functions obtained after the two are superimposed. Which architecture is specifically used depends on a specific networking deployment scenario, and is not uniquely limited herein.

In some possible embodiments, the foregoing communication apparatus may be implemented as a virtualization device. The virtualization device may be a virtual machine (virtual machine, VM), a virtual router, or a virtual switch that runs a program used to send a packet. The virtualization device is deployed on a hardware device (for example, a physical server). For example, the communication apparatus may be implemented based on a general-purpose physical server in combination with a network functions virtualization (network functions virtualization, NFV) technology.

It should be understood that the communication apparatuses in the foregoing product forms have any function of the access node, the aggregation node, the core node, or the core network device in the foregoing method embodiments. Details are not described herein again.

An embodiment of this application further provides a computer-readable storage medium, including instructions. When the instructions are run on a computer, the computer is enabled to control a network apparatus to perform any implementation shown in the foregoing method embodiments.

An embodiment of this application further provides a computer program product. The computer program product includes computer program code. When the computer program code is run on a computer, the computer performs any implementation shown in the foregoing method embodiments.

Further, an embodiment of this application further provides a computer program product. When the computer program product runs on a communication apparatus, the communication apparatus is enabled to perform the method performed by the access node, the aggregation node, the core node, or the core network device in the foregoing method embodiments.

An embodiment of this application further provides a chip system, including a processor and an interface circuit. The interface circuit is configured to: receive instructions, and transmit the instructions to the processor. The processor is configured to implement the method according to any one of the foregoing method embodiments.

Optionally, the chip system further includes a memory, and there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and the method according to any one of the foregoing method embodiments is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

The technical solutions in embodiments of the present invention may be applied to various communication systems, for example, a global system for mobile communications (Global System for Mobile Communications, GSM) system, a code division multiple access (Code Division Multiple Access, CDMA) system, a wideband code division multiple access (Wideband Code Division Multiple Access, WCDMA) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a 5G communication system, a future wireless communication system, and the like.

Steps of the method or algorithm described in combination with the content disclosed in this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk drive, a removable hard disk, a CD-ROM memory, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a terminal. Certainly, the processor and the storage medium may alternatively exist in a first communication apparatus as discrete components.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, each functional unit in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A data transmission method, comprising:
sending, by an access node, first traffic to a first core network device in a core network through a first service plane of a bearer network; and
sending, by the access node, second traffic to a second core network device in the core network through a second service plane of the bearer network, wherein
the first service plane and the second service plane are independent all-active service planes in the bearer network.

2. The method according to claim 1, wherein the method further comprises:
when the first service plane is faulty, switching, by the access node, the first traffic from the first service plane to the second service plane.

3. The method according to claim 1 or 2, wherein the bearer network comprises a first aggregation node and a second aggregation node, wherein
the first aggregation node is an active aggregation node on the first service plane, and the second aggregation node is a standby aggregation node on the first service plane; and the second aggregation node is an active aggregation node on the second service plane, and the first aggregation node is a standby aggregation node on the second service plane.

4. The method according to claim 3, wherein the first service plane comprises a first core node, and the second service plane comprises a second core node;
the access node is connected to the first core network device via the first aggregation node and the first core node; and
the access node is connected to the second core network device via the second aggregation node and the second core node.

5. The method according to claim 4, wherein
the first service plane further comprises a third core node, and the second service plane further comprises a fourth core node; and
the first core node is an active core node on the first service plane, and the third core node is a standby core node on the first service plane; and the second core node is an active core node on the second service plane, and the fourth core node is a standby core node on the second service plane.

6. The method according to any one of claims 1 to 5, wherein the access node is connected to the first service plane through a first pseudo wire, and the access node is connected to the second service plane through a second pseudo wire.

7. The method according to claim 6, wherein the method further comprises:
determining, by the access node according to a first access control list ACL rule, to forward a first packet through the first pseudo wire, wherein a destination IP address of the first packet is an address of the first core network device.

8. The method according to claim 6 or 7, wherein the method further comprises:
determining, by the access node according to a second ACL rule, to forward a second packet through the second pseudo wire, wherein a destination IP address of the second packet is an address of the second core network device.

9. The method according to any one of claims 1 to 5, wherein the method further comprises:
obtaining, by the access node, a first route to the first core network device, wherein the first route comprises a first routing prefix and a first next hop, an IP address of the first core network device matches a destination network segment of the first routing prefix, and the first next hop is the first aggregation node on the first service plane; and
obtaining, by the access node, a second route to the second core network device, wherein the second route comprises a second routing prefix and a second next hop, an IP address of the second core network device matches a destination network segment of the second routing prefix, and the second next hop is the second aggregation node on the second service plane.

10. The method according to claim 9, wherein the method further comprises:
receiving, by the access node, a first packet, and forwarding the first packet to the first aggregation node based on the first route, wherein a destination address of the first packet is the IP address of the first core network device.

11. The method according to claim 9 or 10, wherein the method further comprises:
receiving, by the access node, a second packet, and forwarding the second packet to the second aggregation node based on the second route, wherein a destination address of the second packet is the IP address of the second core network device.

12. A communication system, comprising an access node, a first aggregation node, a second aggregation node, a first core node, a second core node, a first core network device, and a second core network device, wherein
the access node is connected to the first core network device via the first aggregation node and the first core node;
the access node is connected to the second core network device via the second aggregation node and the second core node;
the access node is configured to send first traffic to the first core network device through a first service plane, wherein the first service plane comprises the first aggregation node and the first core node;
the access node is further configured to send second traffic to the second core network device through a second service plane, wherein the second service plane comprises the second aggregation node and the second core node; and
the first service plane and the second service plane are independent all-active service planes in a bearer network.

13. The communication system according to claim 12, wherein
the access node is further configured to switch the first traffic to the second service plane when the first service plane is faulty.

14. The communication system according to claim 12 or 13, wherein the access node is connected to the first aggregation node through a first pseudo wire, and the access node is connected to the second aggregation node through a second pseudo wire.

15. A communication apparatus, configured to perform the method according to any one of claims 1 to 11.
